# EUROPEAN PATENT SPECIFICATION

(11) **EP 4 404 437 B1**
(45) Date of publication and mention of the grant of the patent: **28.10.2026**
(21) Application number: 24152658.1
(22) Date of filing: 18.01.2024
(51) Int. Cl.: H02K 3/28, H02K 3/12

(54) **MOTOR, POWERTRAIN, AND VEHICLE**
MOTOR, ANTRIEBSSTRANG UND FAHRZEUG
MOTEUR, GROUPE MOTOPROPULSEUR ET VÉHICULE

(30) Priority: 20.01.2023 CN 202310103375
(43) Date of publication of application: 24.07.2024
(73) Proprietor: Huawei Digital Power Technologies Co., Ltd., Shenzhen, Guangdong 518043 (CN)
(72) Inventor: JIANG, Kui, 518043 Shenzhen (CN); HOU, Jining, 518043 Shenzhen (CN)
(74) Representative: Gill Jennings & Every LLP

(56) References cited:
- CN-A- 115 411 860
- CN-A- 115 498 794
- US-A1- 2023 009 407

## Description

### TECHNICAL FIELD

This application relates to the field of motors, and specifically, to a motor, a powertrain, and a vehicle.

### BACKGROUND

In recent years, a flat-wire motor is increasingly used in the field of new energy vehicles. The flat-wire motor has a high copper fill ratio, facilitates heat dissipation for a motor winding, can improve a voltage withstand capability of the winding and reduce a length of an end of the winding, and has other advantages, and this can further improve torque density and power density of a motor. Therefore, the flat-wire motor becomes an important measure to promote lightweight of a vehicle, increase an endurance mileage of an electric vehicle, improve space utilization of a vehicle, and reduce costs of a powertrain.

Currently, a winding mode for a stator winding of a conventional flat-wire motor is usually a full-pitch winding. Specifically, the motor includes a stator iron core, stator slots are provided along a circumferential direction of the stator iron core, and the stator winding is wound on the stator iron core through the stator slots. The flat-wire motor with the full-pitch structure has a high harmonic winding coefficient, and has large torque fluctuation during operation. This increases noise vibration harshness (noise vibration harshness, NVH) of the motor and degrades performance of the motor. In a conventional method, the stator winding may be disposed as a short-pitch winding to reduce the harmonic winding coefficient of the flat-wire motor, and improve NVH performance of an electric vehicle. However, for the short-pitch winding of the conventional flat-wire motor, the short-pitch disposing manner is limited by a winding form, a connection for a stator winding in which a quantity N/2 of layers of flat-wire conductors is an odd number cannot be implemented, and it is difficult to well weaken a harmonic magnetic field.

US2023/009407A1 discloses a stator includes a stator core and a stator winding. An inner wall of the stator core is provided with M winding slots, the M winding slots are uniformly disposed in a circumferential direction of the inner wall of the stator core. The stator winding includes flat wire conductors inserted in the winding slots, N layers of flat wire conductors are disposed in any one of the winding slots, and phase units of a first-phase winding, phase units of a second-phase winding, and phase units of a third-phase winding are sequentially and periodically arranged along the inner wall of the stator core. Each phase winding includes P parallel branches. Any one of the parallel branches connects flat wire conductors of M-N/3P layers.

### SUMMARY

This application provides a motor, a powertrain, and a vehicle, to implement a connection for a stator winding in which a quantity N of layers of flat-wire conductors is an odd number or N/2 is an odd number, and to weaken a harmonic magnetic field.

According to the invention, a motor is provided as defined in claim 1. The motor includes a stator and a rotor. The stator includes a stator iron core and a stator winding. In an implementation of the invention, 54 stator slots are evenly provided along a circumferential direction of an inner wall of the stator iron core. Each stator slot includes six layers of flat-wire conductors, and a first-layer flat-wire conductor to a sixth-layer flat-wire conductor are sequentially arranged in the stator slot along a radial direction of the stator iron core. The first-layer flat-wire conductor is close to the bottom of the stator slot along the radial direction of the stator iron core. Every two first-layer flat-wire conductors are connected to each other, and two stator slots, in which two first-layer flat-wire conductors connected to each other are respectively located, are spaced apart by nine stator slots or six stator slots. Second-layer flat-wire conductors are respectively connected to third-layer flat-wire conductors, and two stator slots, in which a second-layer flat-wire conductor and a third-layer flat-wire conductor that are connected to each other are located, are spaced apart by seven stator slots. Fourth-layer flat-wire conductors are respectively connected to fifth-layer flat-wire conductors, and two stator slots, in which a fourth-layer flat-wire conductor and a fifth-layer flat-wire conductor that are connected to each other are located, are spaced apart by seven stator slots. Every two sixth-layer flat-wire conductors are connected to each other, and two stator slots, in which two sixth-layer flat-wire conductors connected to each other are respectively located, are spaced apart by eight stator slots.

In the motor in this application, there are 54 stator slots, and each stator slot is provided with six layers of flat-wire conductors. During winding of the stator winding, the first-layer flat-wire conductor and the sixth-layer flat-wire conductor each may be formed through plug-in of hairpin coils at a same layer. A plug-in mode is simple, without cross-layer plug-in. First-layer flat-wire conductors are connected at a same layer, and first-layer flat-wire conductors connected to each other may be spaced apart by nine stator slots or six stator slots. Therefore, the first-layer flat-wire conductor may include hairpin coils with two types of spans. The sixth-layer flat-wire conductor is at a separate layer, every two sixth-layer flat-wire conductors may be connected to each other, and two sixth-layer flat-wire conductors connected to each other may be spaced apart by eight stator slots. Therefore, the sixth-layer flat-wire conductor may include hairpin coils with one type of span. From the second-layer flat-wire conductor to the fifth-layer flat-wire conductor, every two adjacent layers of flat-wire conductors may be connected to each other, and two flat-wire conductors connected to each other may be spaced apart by seven stator slots, to implement a short-pitch connection. In the motor in this application, regardless of whether half of a quantity of layers of flat-wire conductors is an odd number or an even number, a connection mode for the flat-wire conductors may remain unchanged, and a connection structure of the stator winding is simple. In addition, the flat-wire conductors in the stator winding in this application are connected at a same layer or adjacent layers during connection, without a cross-layer connection. A type of a connection wire is simple, and automatic plug-in can be implemented. In addition, testing shows that a flat-wire motor with this structure can further effectively weaken a harmonic magnetic field, for example, effectively weaken (6kp)th-order noise in a conventional short-pitch winding, to improve NVH performance of a motor. A flat-wire motor with the foregoing performance may be used in an electric vehicle to effectively reduce noise during operation of the electric vehicle.

In an optional implementation, each phase of winding of the stator winding includes a plurality of phase units that are evenly disposed along a circumferential direction of the stator iron core at spacings, from the first-layer flat-wire conductor to the sixth-layer flat-wire conductor, every two layers of flat-wire conductors in each phase unit constitute a phase spread, and adjacent phase spreads of any phase unit are sequentially staggered by one stator slot.

In an optional implementation, each phase of winding of the stator winding includes three parallel branches, one of a wire incoming end and a wire outgoing end of each parallel branch of each phase of winding is led out from the first-layer flat-wire conductor, and the other of the wire incoming end and the wire outgoing end of each parallel branch of each phase of winding is led out from the second-layer flat-wire conductor.

In an optional implementation, each phase of winding of the stator winding includes three parallel branches, wire incoming ends of parallel branches of each phase of winding are located in adjacent stator slots, and wire outgoing ends of parallel branches of each phase of winding are located in adjacent stator slots.

According to a further implementation, 72 stator slots are evenly provided along a circumferential direction of an inner wall of the stator iron core. Each stator slot includes eight layers of flat-wire conductors, and a first-layer flat-wire conductor to an eighth-layer flat-wire conductor are sequentially arranged in the stator slot along a radial direction of the stator iron core. The first-layer flat-wire conductor is close to the bottom of the stator slot along the radial direction of the stator iron core.

Every two first-layer flat-wire conductors are connected to each other, and two stator slots, in which two first-layer flat-wire conductors connected to each other are respectively located, are spaced apart by 12 stator slots or eight stator slots.

Second-layer flat-wire conductors are respectively connected to third-layer flat-wire conductors, and two stator slots, in which a second-layer flat-wire conductor and a third-layer flat-wire conductor that are connected to each other are located, are spaced apart by 10 stator slots.

Fourth-layer flat-wire conductors are respectively connected to fifth-layer flat-wire conductors, and two stator slots, in which a fourth-layer flat-wire conductor and a fifth-layer flat-wire conductor that are connected to each other are located, are spaced apart by 10 stator slots.

Sixth-layer flat-wire conductors are respectively connected to seventh-layer flat-wire conductors, and two stator slots, in which a sixth-layer flat-wire conductor and a seventh-layer flat-wire conductor that are connected to each other are located, are spaced apart by 10 stator slots.

Every two eighth-layer flat-wire conductors are connected to each other, and two stator slots, in which two eighth-layer flat-wire conductors connected to each other are respectively located, are spaced apart by 11 stator slots.

In an optional implementation, each phase of winding of the stator winding includes a plurality of phase units that are evenly disposed along a circumferential direction of the stator iron core at spacings, from the first-layer flat-wire conductor to the eighth-layer flat-wire conductor, every two layers of flat-wire conductors in each phase unit constitute a phase spread, and adjacent phase spreads of any phase unit are sequentially staggered by one stator slot.

In an optional implementation, each phase of winding of the stator winding includes four parallel branches, one of a wire incoming end and a wire outgoing end of each parallel branch of each phase of winding is led out from the first-layer flat-wire conductor, and the other of the wire incoming end and the wire outgoing end of each parallel branch of each phase of winding is led out from the second-layer flat-wire conductor.

In an optional implementation, each phase of winding of the stator winding includes four parallel branches, wire incoming ends of parallel branches of each phase of winding are located in adjacent stator slots, and wire outgoing ends of parallel branches of each phase of winding are located in adjacent stator slots.

According to a further implementation, 48 stator slots are evenly provided along a circumferential direction of an inner wall of the stator iron core. Each stator slot includes four layers of flat-wire conductors, and a first-layer flat-wire conductor to a fourth-layer flat-wire conductor are sequentially arranged in the stator slot along a radial direction of the stator iron core. The first-layer flat-wire conductor is close to the bottom of the stator slot along the radial direction of the stator iron core.

Every two first-layer flat-wire conductors are connected to each other, and two stator slots, in which two first-layer flat-wire conductors connected to each other are respectively located, are spaced apart by six stator slots or four stator slots.

Second-layer flat-wire conductors are respectively connected to third-layer flat-wire conductors, and two stator slots, in which a second-layer flat-wire conductor and a third-layer flat-wire conductor that are connected to each other are located, are spaced apart by four stator slots.

Every two fourth-layer flat-wire conductors are connected to each other, and two stator slots, in which two fourth-layer flat-wire conductors connected to each other are respectively located, are spaced apart by five stator slots.

In an optional implementation, each phase of winding of the stator winding includes a plurality of phase units that are evenly disposed along a circumferential direction of the stator iron core at spacings, from the first-layer flat-wire conductor to the fourth-layer flat-wire conductor, every two layers of flat-wire conductors in each phase unit constitute a phase spread, and adjacent phase spreads of any phase unit are sequentially staggered by one stator slot.

In an optional implementation, each phase of winding of the stator winding includes two parallel branches, one of a wire incoming end and a wire outgoing end of each parallel branch of each phase of winding is led out from the first-layer flat-wire conductor, and the other of the wire incoming end and the wire outgoing end of each parallel branch of each phase of winding is led out from the second-layer flat-wire conductor.

In an optional implementation, each phase of winding of the stator winding includes two parallel branches, wire incoming ends of parallel branches of each phase of winding are located in adjacent stator slots, and wire outgoing ends of parallel branches of each phase of winding are located in adjacent stator slots.

According to the invention, the motor includes a stator and a rotor. The stator includes a stator iron core and a stator winding. Z stator slots are evenly provided along a circumferential direction of an inner wall of the stator iron core. Each stator slot includes N layers of flat-wire conductors, and a first-layer flat-wire conductor to an Nth-layer flat-wire conductor are sequentially arranged in the stator slot along a radial direction of the stator iron core. The first-layer flat-wire conductor is close to the bottom of the stator slot along the radial direction of the stator iron core. The first-layer flat-wire conductor includes a plurality of hairpin coils with spans of Z/2p+1 and Z/2p-q+1, and any one of the hairpin coils is located at a same layer. The Nth-layer flat-wire conductor includes a plurality of hairpin coils with a span of Z/2p, and any one of the hairpin coils is located at a same layer. From a second-layer flat-wire conductor to an (N-1)th-layer flat-wire conductor, every two adjacent layers of flat-wire conductors include a plurality of hairpin coils with a span of Z/2p-1, and any one of the hairpin coils is located at two adjacent layers. q is a quantity of slots per phase per pole of the stator winding. 2p is a quantity of magnetic poles of the stator winding, and p is a positive integer.

In the motor in this application, the first-layer flat-wire conductor and the Nth-layer flat-wire conductor each may be formed through plug-in of hairpin coils at a same layer. A plug-in mode is simple, without cross-layer plug-in. The first-layer flat-wire conductor is a separate coil group, and the coil group includes hairpin coils with two types of spans. The Nth-layer flat-wire conductor is at a separate layer, and hairpin coils with one type of span may form a separate coil group. Hairpin coils with a span of Z/2p-1 in every two adjacent layers of flat-wire conductors of a second-layer flat-wire conductor to an (N-1)th-layer flat-wire conductor may constitute a coil group. Therefore, in the motor in this application, regardless of whether half of a quantity of layers of flat-wire conductors is an odd number or an even number, a connection mode for the flat-wire conductors may remain unchanged, and a connection structure of the stator winding is simple. In addition, the stator winding in this application includes a coil group corresponding to a single layer of flat-wire conductor and a coil group corresponding to two adjacent layers of flat-wire conductors. A plug-in structure of the coil groups is simple, without cross-layer plug-in. Any coil group includes a single type of coil, so that an automatic plug-in process can be implemented. In addition, testing shows that a flat-wire motor with this structure can further effectively weaken a harmonic magnetic field, for example, effectively weaken (6kp)th-order noise in a conventional short-pitch winding, to improve NVH performance of a motor. A flat-wire motor with the foregoing performance may be used in an electric vehicle to effectively reduce noise during operation of the electric vehicle.

In an optional implementation, each phase of winding of the stator winding includes a plurality of phase units that are evenly disposed along a circumferential direction of the stator iron core at spacings, from the first-layer flat-wire conductor to the Nth-layer flat-wire conductor, every two layers of flat-wire conductors in each phase unit constitute a phase spread, and adjacent phase spreads of any phase unit are sequentially staggered by one stator slot. The stator winding may include m phases of windings, each phase of winding includes a plurality of phase units, any phase unit includes at least two phase spreads, and adjacent phase spreads are staggered by one stator slot. In this way, a short-pitch winding can be formed.

In an optional implementation, each phase of winding includes q or 2q parallel branches.

In an optional implementation, a value of a quantity N of layers of flat-wire conductors ranges from 2 to 2q, and a quantity q of slots per phase per pole is less than or equal to 4.

In an optional implementation, a quantity of types of hairpin coils forming the stator winding is N/2+2. Therefore, the stator winding may be formed by using a minimum quantity of types of hairpin coils.

In an optional implementation, one of a wire incoming end and a wire outgoing end of each parallel branch of each phase of winding is led out from the first-layer flat-wire conductor, and the other of the wire incoming end and the wire outgoing end of each parallel branch of each phase of winding is led out from the second-layer flat-wire conductor. The wire incoming end and the wire outgoing end of each parallel branch each are led out from a bottom-layer flat-wire conductor of a stator slot. This can simplify a connection mode for wire entry and exit, and avoid cross-layer connection wires.

In an optional implementation, wire incoming ends of parallel branches of each phase of winding are located in adjacent stator slots, and wire outgoing ends of parallel branches of each phase of winding are located in adjacent stator slots. Incoming wires of parallel branches of each phase of winding are led out from adjacent stator slots, and outgoing wires of the parallel branches are also led out from adjacent stator slots, so that the parallel branches can be conveniently connected to a busbar, to implement a parallel connection between the parallel branches. This simplifies a connection structure of the busbar, and avoids disposing a cross-layer or cross-slot neutral connection wire on the busbar.

In an optional implementation, a quantity Z of stator slots is 48, 54, or 72, and N may be 4, 6, 8, 10, or 12. When Z is 54, p is 3, and q is 3, a span of the first-layer flat-wire conductor is a combination of 10 and 7, a span of the Nth-layer flat-wire conductor is 9, and a span of every two adjacent layers of flat-wire conductors of the second-layer flat-wire conductor to the (N-1)th-layer flat-wire conductor is 8.

In an optional implementation, Z is 72, p is 3, q is 3, a span of the first-layer flat-wire conductor is a combination of 10 and 7, a span of the Nth-layer flat-wire conductor is 9, and a span of every two adjacent layers of flat-wire conductors from the second-layer flat-wire conductor to the (N-1)th-layer flat-wire conductor is 8.

In an optional implementation, Z is 48, p is 4, q is 2, a span of the first-layer flat-wire conductor is a combination of 7 and 5, a span of the Nth-layer flat-wire conductor is 6, and a span of every two adjacent layers of flat-wire conductors from the second-layer flat-wire conductor to the (N-1)th-layer flat-wire conductor is 5.

In a possible implementation, pigtails of all phases of windings are connected in a Y shape or a triangular shape.

The motor in this application includes but is not limited to a permanent magnet synchronous motor, an electrically excited synchronous motor, an asynchronous motor, and the like. The rotor of the flat-wire motor may have any rotor topology, for example, a surface-mounted type, a built-in "linear" shape, a built-in V shape, a built-in double-V shape, a built-in U shape, or a built-in UV shape. The flat-wire motor in this application may be a motor for an electric vehicle, a traction motor for a high-speed train, an aerospace electric propulsion motor, an electric propulsion motor for a ship, or the like.

According to a further aspect, this application provides a powertrain. The powertrain includes a gearbox and the motor according to the first aspect. The motor is connected to the gearbox in a transmission manner.

According to a further aspect, this application provides a vehicle. The vehicle includes the powertrain according to the fifth aspect of this application.

The vehicle in this application includes but is not limited to an electric vehicle.

For technical effect that can be achieved in the second aspect to the sixth aspect, refer to corresponding effect descriptions in the first aspect. Details are not described herein again.

### BRIEF DESCRIPTION OF DRAWINGS

FIG. 1 is a schematic diagram of a structure of a motor stator according to an embodiment of this application;
FIG. 2 is a schematic diagram of a structure of a stator iron core according to an embodiment of this application;
FIG. 3 is a schematic diagram of a structure of a hairpin coil according to an embodiment of this application;
FIG. 4 is a schematic diagram of a structure of distribution of flat-wire conductors in stator slots according to an embodiment of this application;
FIG. 5 is a schematic diagram of connections between parallel branches of a U-phase winding according to an embodiment;
FIG. 6 is a schematic diagram of a structure of a Y-shaped connection between different phases of windings according to an embodiment of this application;
FIG. 7 is a schematic diagram of a structure of a triangular connection between different phases of windings according to an embodiment of this application;
FIG. 8 is a schematic diagram of a structure of connections between parallel branches of U phases according to an embodiment of this application;
FIG. 9 is a schematic diagram of a simplified structure of parallel branches of U phases according to another embodiment of this application;
FIG. 10 is a schematic diagram of a structure of connections between parallel branches of a U-phase winding in Comparative Example 1;
FIG. 11 is a schematic diagram of a structure of connections between parallel branches of a U-phase winding in Comparative Example 2; and
FIG. 12 is a schematic diagram of a structure of connections between parallel branches of a U-phase winding in Comparative Example 3.

Reference numerals:
10: stator iron core; 10a: plug-in end; 10b: extension end; 11: stator slot; 20: stator winding; 20a: crown end; 20b: welding end; 21: flat-wire conductor; 22: hairpin coil; 221: first plug-in portion; 222: second plug-in portion; 223: connection portion; 224: first bent portion; and 225: second bent portion.

### DESCRIPTION OF EMBODIMENTS

To make objectives, technical solutions, and advantages of this application clearer, the following further describes this application in detail with reference to accompanying drawings.

Terms used in the following embodiments are merely intended to describe specific embodiments, but not to limit this application. The terms "one", "a", "the foregoing", "the", and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment, but mean "one or more but not all of embodiments", unless otherwise specifically emphasized in another manner. The terms "include", "comprise", "have", and their variants all mean "include but are not limited to", unless otherwise specifically emphasized in another manner.

For ease of understanding, the following first describes related terms.

A stator is a stationary part in a motor, and has a function of generating a rotating magnetic field.

A rotor is a rotating component in a motor, and has a function of implementing conversion between electric energy and mechanical energy.

A quantity of magnetic poles is a quantity of poles of a motor. Magnetic poles include an N pole and an S pole. Usually, one N pole and one S pole are referred to as a pair of magnetic poles, that is, a quantity of pole pairs is 1. Therefore, when a quantity of pole pairs of a motor is 1, 2, 3, or 4, a quantity of poles of the motor is 2, 4, 6, or 8.

A quantity q of slots per phase per pole: A quantity of slots occupied by each phase of winding in each magnetic pole is referred to as a quantity of slots per phase per pole.

Flat-wire motors are widely used in electric vehicles due to high power density and high torque density. A winding mode for a stator winding of a conventional flat-wire motor is usually a full-pitch winding. During use of the full-pitch winding, a torque fluctuates greatly, degrading NVH performance of the motor. A short-pitch winding can reduce a harmonic winding coefficient of a motor to improve NVH performance of the motor. However, in a conventional motor with a short-pitch winding, due to a limitation by a winding form of the motor, only a stator in which a quantity of layers of flat-wire conductors is an even number is applicable, and a quantity of layers of flat-wire conductors in the stator cannot be effectively extended. This greatly limits a structural form of the stator.

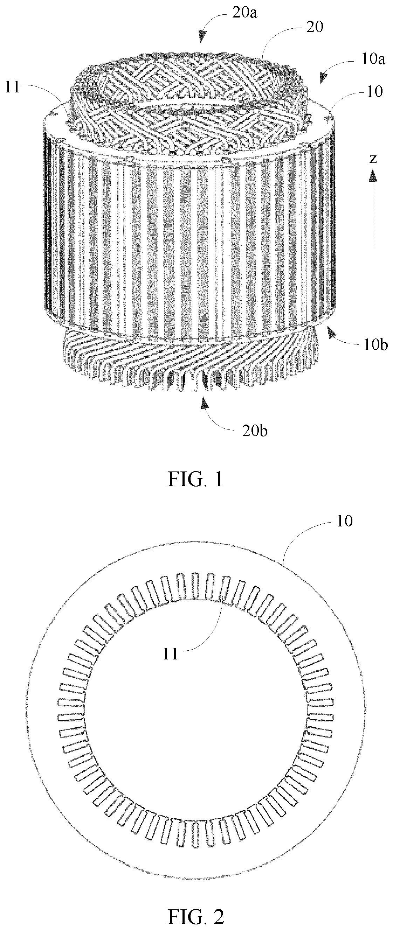

To resolve the foregoing technical problem, embodiments of this application further provide a motor. The motor includes a rotor and a stator, and the rotor is disposed in space enclosed by an inner wall of a stator iron core. FIG. 1 is a schematic diagram of a structure of a stator according to an embodiment of this application. As shown in FIG. 1, the stator includes a stator iron core 10 and a stator winding 20.

The following first describes a structure of the stator iron core 10 in this application with reference to FIG. 1 and FIG. 2.

FIG. 2 is a schematic diagram of a structure of a stator iron core according to an embodiment. As shown in FIG. 1 and FIG. 2, a plurality of stator slots 11 are provided on an inner wall of the stator iron core 10, and a quantity of stator slots 11 may be denoted as Z. Z may be a natural number that is a multiple of 3, and may be specifically 54, 72, or the like. A specific value of Z may be selected based on a design of a motor. The Z stator slots 11 are provided on the inner wall of the stator iron core 10, and are evenly provided along a circumferential direction of the inner wall of the stator iron core 10. Any stator slot 11 extends along an axial direction of the stator iron core 10, and penetrates the inner wall of the stator iron core 10 along the axial direction of the stator iron core 10. The axial direction of the stator iron core 10 is a z direction shown in FIG. 1. The stator iron core 10 is divided into a plug-in end 10a and an extension end 10b along the axial direction of the stator iron core 10, and any stator slot 11 may extend from the plug-in end 10a to the extension end 10b.

The following describes in detail arrangement of the stator winding in this application with reference to FIG. 1 to FIG. 3.

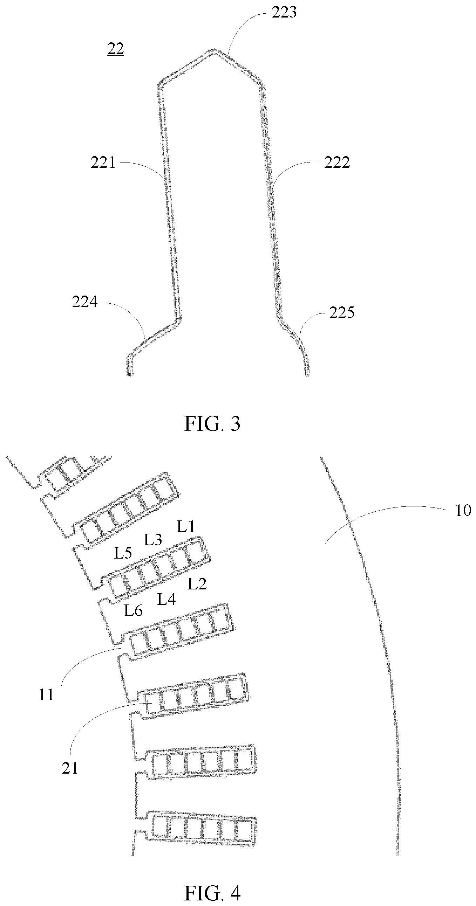

As shown in FIG. 1 and FIG. 2, the stator winding 20 may be formed by winding a plurality of hairpin coils. FIG. 3 is a schematic diagram of a structure of a hairpin coil according to an embodiment of this application. As shown in FIG. 3, any hairpin coil 22 includes a first plug-in portion 221 and a second plug-in portion 222 that are connected to each other. In an example for description, the hairpin coil 22 includes the first plug-in portion 221, the second plug-in portion 222, a connection portion 223, a first bent portion 224, and a second bent portion 225. The first bent portion 224, the first plug-in portion 221, the connection portion 223, the second plug-in portion 222, and the second bent portion 225 are sequentially connected to form a U-shaped coil or a V-shaped coil. When the hairpin coils 22 are wound to form the stator winding 20, the hairpin coils 22 may be inserted into the stator slots 11 from the plug-in end 10a of the stator iron core 10, and extend out from the extension end 10b.

As shown in FIG. 1 to FIG. 3, after the hairpin coils 22 are inserted into the stator slots 11 of the stator iron core 10 to form the stator winding 20, connection portions 223 of the hairpin coils 22 are located on one side of the plug-in end 10a of the stator iron core 10 to form a crown end 20a of the stator winding 20, and first bent portions 224 and second bent portions 225 are located on one side of the extension end 10b of the stator iron core 10 to form a welding end 20b of the stator winding 20. After the hairpin coil 22 is inserted into the stator slot 11, parts of the first plug-in portion 221 and the second plug-in portion 222 that extend out of the stator iron core 10 may be bent to form the first bent portion 224 and the second bent portion 225. After plug-in is completed, the first plug-in portion 221 and the second plug-in portion 222 form a flat-wire conductor 21, and a cross-sectional shape of the flat-wire conductor 21 may be a rectangle.

The following further describes in detail arrangement of the flat-wire conductor in this application with reference to FIG. 1 and FIG. 4. FIG. 4 is a schematic top view of a structure of a flat-wire conductor 21 inserted into a stator slot 11 according to an embodiment of this application. As shown in FIG. 4, N layers of flat-wire conductors 21 may be disposed in any stator slot 11 in an embodiment of this application. N is a multiple of 2. For example, N may be 4, 6, 8, 10, or 12. As shown in FIG. 4, when N is 6, six layers of flat-wire conductors 21 are disposed in each stator slot 11. It can be understood that a quantity of layers of flat-wire conductors 21 shown in FIG. 4 is merely an example for description, and in addition to the six layers of flat-wire conductors 21, another quantity of layers of flat-wire conductors 21 may alternatively be disposed. A quantity of layers of flat-wire conductors 21 in each stator slot 11 is not specifically limited herein.

As shown in FIG. 4, N layers of flat-wire conductors 21 are disposed in any stator slot 11, and from the bottom to an opening of the any stator slot 11, the N layers of flat-wire conductors 21 are denoted as an L₁ layer, an L₂ layer, ..., an L_{N-1} layer, and an L_{N} layer. In a radial direction of the stator iron core 10, the opening of the stator slot 11 is provided close to the inner wall of the stator iron core 10, and the bottom of the stator slot 11 is provided close to an outer wall of the stator iron core 10.

It can be understood that a larger quantity of stator slots 11 of the stator iron core 10 indicates a larger quantity of layers of flat-wire conductors 21 in each stator slot 11 and a larger quantity of required coils 22. A quantity of hairpin coils 22 may be set based on the quantity Z of stator slots 11 and the quantity N of layers of flat-wire conductors 21 in the stator slot 11.

Still as shown in FIG. 1, all hairpin coils 22 forming the stator winding 20 may be divided into a plurality of coil groups. Each coil group includes a plurality of hairpin coils. A first plug-in portion 221 and a second plug-in portion 222 of any hairpin coil are respectively inserted into different stator slots 11 to form flat-wire conductors 21.

A flat-wire conductor 21 located at a bottom layer of the stator slot 11 may be a first-layer flat-wire conductor, or a flat-wire conductor 21 located at an opening layer of the stator slot 11 may be a first-layer flat-wire conductor. With reference to FIG. 4, for example, the first-layer flat-wire conductor is located at the bottom layer. First plug-in portions 221 and second plug-in portions 222 of hairpin coils 22 forming the first-layer flat-wire conductor are inserted into first layers of stator slots 11 of adjacent poles and phases. In this case, the hairpin coils 22 inserted into the first layers of the stator slots 11 constitute a coil group. First plug-in portions 221 and second plug-in portions 222 of hairpin coils 22 for forming a second-layer flat-wire conductor to an (N-1)th-layer flat-wire conductor are respectively inserted into stator slots 11 of adjacent poles and phases to form adjacent layers of flat-wire conductors 21. Hairpin coils 22 forming same adjacent layers of flat-wire conductors 21 may constitute a coil group. First plug-in portions 221 and second plug-in portions 222 of hairpin coils 22 for forming an Nth-layer flat-wire conductor are inserted into Nth layers of stator slots 11, so that the hairpin coils 22 forming the Nth-layer flat-wire conductor may constitute a coil group. For example, N is 10. Hairpin coils 22 forming a second-layer flat-wire conductor and a third-layer flat-wire conductor constitute a coil group, hairpin coils 22 forming a fourth-layer flat-wire conductor and a fifth-layer flat-wire conductor constitute a coil group, hairpin coils 22 forming a sixth-layer flat-wire conductor and a seventh-layer flat-wire conductor constitute a coil group, hairpin coils 22 forming an eighth-layer flat-wire conductor and a ninth-layer flat-wire conductor constitute a coil group, and hairpin coils 22 forming a tenth-layer flat-wire conductor constitute a coil group.

It can be learned from the foregoing descriptions that first plug-in portions 221 and second plug-in portions 222 of hairpin coils 22 forming each of the first-layer flat-wire conductor and the Nth-layer flat-wire conductor are inserted into a same layer, and first plug-in portions 221 and second plug-in portions 222 of hairpin coils 22 of each of other coil groups are inserted into adjacent layers.

A coil group for forming the first-layer flat-wire conductor 21 may include hairpin coils 22 with two types of spans, and the spans of the two types of hairpin coils 22 are Z/2p+1 and Z/2p-q+1 respectively. Each of coil groups for forming the second-layer flat-wire conductor 21 to the (N-1)th-layer flat-wire conductor 21 includes hairpin coils 22 with one type of span, and a span of hairpin coils 22 in any coil group is Z/2p-1. In addition, a coil group for forming the Nth-layer flat-wire conductor 21 may include one type of hairpin coil 22, and a span of this type of hairpin coil 22 is Z/2p. In this arrangement structure, a quantity of types of hairpin coils 22 forming the stator winding is N/2+2. Therefore, a total quantity of types of hairpin coils 22 of the stator winding in this application is small, and a quantity of types of hairpin coils 22 is effectively reduced.

The hairpin coils 22 forming the stator winding may be connected to form an m-phase winding. m may be 2, 3, 4, 5, 6, or the like. To be specific, a corresponding quantity of phases of the flat-wire motor may be 2, 3, 4, 5, 6, or more. A three-phase winding is used as an example. The stator winding may be divided into a first-phase winding, a second-phase winding, and a third-phase winding that respectively correspond to a U-phase winding, a V-phase winding, and a W-phase winding. In the m-phase winding, any phase of winding may include a plurality of phase units. During connection, phase units of the first-phase winding, phase units of the second-phase winding, and phase units of the third-phase winding are periodically arranged along the inner wall of the stator iron core in sequence. Each phase unit of each phase of winding is a phase of a pole, and a quantity of stator slots corresponding to each phase unit is a quantity of slots per phase per pole.

It can be understood that a quantity of phases of the flat-wire motor is not specifically limited in this application, and the stator winding 20 may be a single-phase winding, a three-phase winding, or a six-phase winding.

In this embodiment of this application, the quantity Z of stator slots is equal to 2mpq. p is a quantity of magnetic poles of the stator winding, and p is a positive integer. q is a quantity of slots per phase per pole of the stator winding, q=Z/(2mp), and q≤4. mpq is a product of m, p, and q. For example, the stator winding is a three-phase winding. To be specific, m is 3, a quantity 2p of magnetic poles is 6, and the quantity q of slots per phase per pole is 3. In this case, the quantity Z of stator slots on the stator iron core 10 is 54.

In the stator winding in this embodiment of this application, each phase of winding includes q or 2q parallel branches, and hairpin coils 22 in any coil group are evenly distributed in parallel branches of each phase of winding. The quantity N of layers of flat-wire conductors in the stator slot 11 is less than or equal to 2q. At the welding end 20b, spans of all parallel branches on the first-layer flat-wire conductor 21 to the Nth-layer flat-wire conductor 21 are Z/2p.

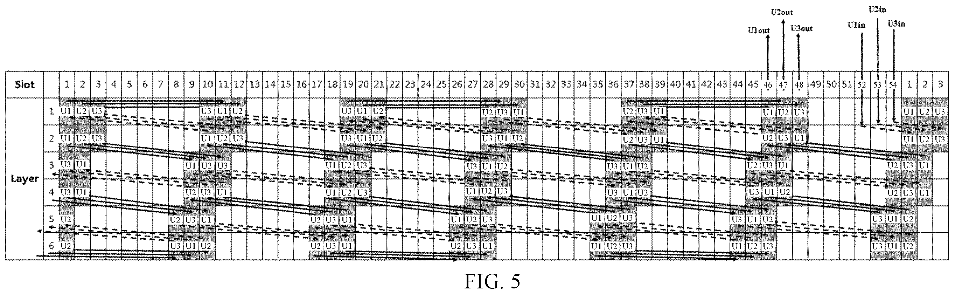

FIG. 5 is a schematic diagram of a structure of connections of a U-phase winding according to an embodiment. As shown in FIG. 5, in this embodiment, the U-phase winding includes three parallel branches. The U-phase winding includes a plurality of phase units that are evenly disposed along a circumferential direction of the stator iron core at spacings. From the first-layer flat-wire conductor to the Nth-layer flat-wire conductor, every two layers of flat-wire conductors in each phase unit constitute a phase spread, and adjacent phase spreads of any phase unit are sequentially staggered by one stator slot. A quantity of phase spreads in one phase unit is not greater than q. A V-phase winding and a W-phase winding each are connected in a manner similar to that of the U-phase winding, and each include phase units and phase spreads that are disposed in a same manner.

Each phase unit may include two, three, four, five, or more phase spreads. Adjacent phase spreads of any phase unit are staggered by one stator slot along a clockwise direction or a counterclockwise direction. To be specific, directions of staggered stator slots between adjacent phase spreads of one phase unit are the same. In this way, an equivalent pitch of the stator winding is less than a pole pitch of the stator winding to a maximum extent.

With reference to FIG. 5, a connection mode between phase units in each phase of winding is described by using a U phase as an example. At a plug-in end, a span of a first-layer flat-wire conductor in each parallel branch is a combination of Z/2p+1 and Z/2p-q+1, a span of an Nth-layer flat-wire conductor in each parallel branch is Z/2p, and a span of a second-layer flat-wire conductor to an (N-1)th-layer flat-wire conductor in each parallel branch is Z/2p-1. At the welding end, a span of the first-layer flat-wire conductor to the Nth-layer flat-wire conductor in each parallel branch is Z/2p. Through the foregoing connection, flat-wire conductors of phase spreads can be evenly distributed in parallel branches, so that a potential balance is maintained between the parallel branches, and generation of circulating currents is alleviated.

A quantity of stator slots shown in FIG. 5 is used as an example. When Z is 54 and q is 3, at the plug-in end, the span of the first-layer flat-wire conductor in each parallel branch is a combination of 10 and 7, a span of every two of the second-layer flat-wire conductor to the (N-1)th-layer flat-wire conductor is 8, and the span of the Nth-layer flat-wire conductor is 9. At the welding end, the span of the first-layer flat-wire conductor to the Nth-layer flat-wire conductor in each parallel branch is 9.

In addition, the quantity Z of stator slots may alternatively be 72. For example, when Z is 72 and q is 4, at the plug-in end, the span of the first-layer flat-wire conductor in each parallel branch is a combination of 13 and 9, a span of every two of the second-layer flat-wire conductor to the (N-1)th-layer flat-wire conductor is 11, and the span of the Nth-layer flat-wire conductor is 12. At the welding end, the span of the first-layer flat-wire conductor to the Nth-layer flat-wire conductor in each parallel branch is 12.

In the stator winding in this application, a wire incoming end and a wire outgoing end of each parallel branch of each phase of winding each are led out from a bottom-layer flat-wire conductor of a stator slot.

As shown in FIG. 5, in an optional embodiment, one of a wire incoming end and a wire outgoing end of each parallel branch of each phase of winding is led out from a bottom-layer flat-wire conductor of a stator slot, and the other of the wire incoming end and the wire outgoing end of each parallel branch of each phase of winding is led out from a flat-wire conductor at an adjacent layer of the bottom-layer flat-wire conductor. For example, the wire outgoing end of each parallel branch is led out from an L₁-layer flat-wire conductor, and the wire incoming end of each parallel branch is led out from an L₂-layer flat-wire conductor. Lead-out locations for the wire incoming end and the wire outgoing end of each parallel branch are interchangeable.

Still as shown in FIG. 5, in an embodiment, wire incoming ends of parallel branches of each phase of winding are located in adjacent stator slots, and wire outgoing ends of parallel branches of each phase of winding are located in adjacent stator slots. The U-phase winding in FIG. 5 is used as an example. Wire incoming ends of the three parallel branches are all led out from L₁-layer flat-wire conductors in adjacent stator slots, and wire outgoing ends of the three parallel branches are all led out from L₁-layer flat-wire conductors in adjacent stator slots. The wire incoming ends are led out from flat-wire conductors at same layers in adjacent stator slots, and the wire outgoing ends are led out from flat-wire conductors at same layers in adjacent stator slots, so that a busbar can be conveniently disposed, to implement a connection between the three parallel branches and the busbar.

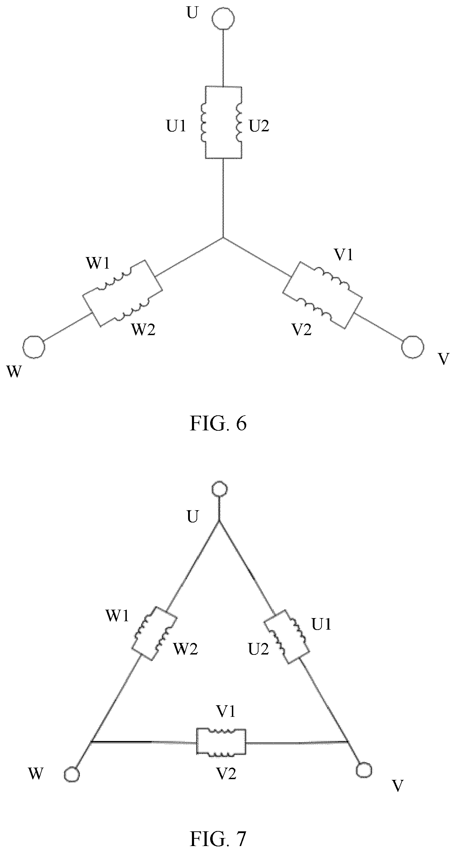

FIG. 6 and FIG. 7 show connection modes at ends of different phases of windings. A Y-shaped connection mode and a triangular connection mode may be used.

Based on a same technical concept, an embodiment of this application provides a specific motor. The motor includes a stator and a rotor. The stator includes a stator iron core and a stator winding. In this embodiment of this application, 54 stator slots are evenly provided along a circumferential direction of an inner wall of the stator iron core. Six layers of flat-wire conductors are inserted into the stator slot along a radial direction of the stator iron core. In a direction from an outer wall of the stator iron core to an inner wall of the stator iron core, six layers of flat-wire conductors in each stator slot are denoted as a first-layer flat-wire conductor, a second-layer flat-wire conductor, a third-layer flat-wire conductor, a fourth-layer flat-wire conductor, a fifth-layer flat-wire conductor, and a sixth-layer flat-wire conductor. The first-layer flat-wire conductor is disposed close to the outer wall of the stator iron core, and the sixth-layer flat-wire conductor is disposed close to the inner wall of the stator iron core.

At a plug-in end of the stator iron core, every two first-layer flat-wire conductors are connected to each other, and two first-layer flat-wire conductors connected to each other are spaced apart by nine stator slots or six stator slots. To be specific, two stator slots, in which two first-layer flat-wire conductors connected to each other are respectively located, are spaced apart by nine stator slots or six stator slots. Second-layer flat-wire conductors are respectively connected to third-layer flat-wire conductors, and a second-layer flat-wire conductor and a third-layer flat-wire conductor that are connected to each other are spaced apart by seven stator slots. To be specific, two stator slots, in which a second-layer flat-wire conductor and a third-layer flat-wire conductor that are connected to each other are located, are spaced apart by seven stator slots. Fourth-layer flat-wire conductors are respectively connected to fifth-layer flat-wire conductors, and a fourth-layer flat-wire conductor and a fifth-layer flat-wire conductor that are connected to each other are spaced apart by seven stator slots. To be specific, two stator slots, in which a fourth-layer flat-wire conductor and a fifth-layer flat-wire conductor that are connected to each other are located, are spaced apart by seven stator slots. Every two sixth-layer flat-wire conductors are connected to each other, and two sixth-layer flat-wire conductors connected to each other are spaced apart by eight stator slots. To be specific, two stator slots, in which two sixth-layer flat-wire conductors connected to each other are respectively located, are spaced apart by eight stator slots.

The stator winding in this embodiment of this application may include a plurality of phases of windings. Along a circumferential direction of the stator iron core, flat-wire conductors for forming each phase of winding may be divided into a plurality of phase units that are evenly disposed at spacings. From the first-layer flat-wire conductor to the sixth-layer flat-wire conductor, every two layers of flat-wire conductors in each phase unit constitute a phase spread. To be specific, the first-layer flat-wire conductor and the second-layer flat-wire conductor may constitute a phase spread, the third-layer flat-wire conductor and the fourth-layer flat-wire conductor may constitute a phase spread, and the fifth-layer flat-wire conductor and the sixth-layer flat-wire conductor may constitute a phase spread. In each phase unit, two adjacent phase spreads are sequentially staggered by one stator slot. For example, in one phase unit, the phase spread formed by the first-layer flat-wire conductor and the second-layer flat-wire conductor and the phase spread formed by the third-layer flat-wire conductor and the fourth-layer flat-wire conductor are staggered by one stator slot, and the phase spread formed by the third-layer flat-wire conductor and the fourth-layer flat-wire conductor and the phase spread formed by the fifth-layer flat-wire conductor and the sixth-layer flat-wire conductor are staggered by one stator slot.

Each phase of winding of the stator winding includes three parallel branches. One of a wire incoming end and a wire outgoing end of each parallel branch of each phase of winding is led out from the first-layer flat-wire conductor, and the other of the wire incoming end and the wire outgoing end of each parallel branch of each phase of winding is led out from the second-layer flat-wire conductor. Wire incoming ends of parallel branches of each phase of winding are located in adjacent stator slots, and wire outgoing ends of parallel branches of each phase of winding are located in adjacent stator slots.

Based on a same technical concept, an embodiment of this application provides a specific motor. The motor includes a stator and a rotor. The stator includes a stator iron core and a stator winding. In this embodiment of this application, 72 stator slots are evenly provided along a circumferential direction of an inner wall of the stator iron core. Eight layers of flat-wire conductors are inserted into the stator slot along a radial direction of the stator iron core. In a direction from an outer wall of the stator iron core to an inner wall of the stator iron core, eight layers of flat-wire conductors in each stator slot are denoted as a first-layer flat-wire conductor, a second-layer flat-wire conductor, a third-layer flat-wire conductor, a fourth-layer flat-wire conductor, a fifth-layer flat-wire conductor, a sixth-layer flat-wire conductor, a seventh-layer flat-wire conductor, and an eighth-layer flat-wire conductor. The first-layer flat-wire conductor is disposed close to the outer wall of the stator iron core, and the eighth-layer flat-wire conductor is disposed close to the inner wall of the stator iron core.

At a plug-in end of the stator iron core, every two first-layer flat-wire conductors are connected to each other, and two first-layer flat-wire conductors connected to each other are spaced apart by 12 stator slots or eight stator slots. To be specific, two stator slots, in which two first-layer flat-wire conductors connected to each other are respectively located, are spaced apart by 12 stator slots or eight stator slots. Second-layer flat-wire conductors are respectively connected to third-layer flat-wire conductors, and a second-layer flat-wire conductor and a third-layer flat-wire conductor that are connected to each other are spaced apart by 10 stator slots. To be specific, two stator slots, in which a second-layer flat-wire conductor and a third-layer flat-wire conductor that are connected to each other are located, are spaced apart by 10 stator slots. Fourth-layer flat-wire conductors are respectively connected to fifth-layer flat-wire conductors, and a fourth-layer flat-wire conductor and a fifth-layer flat-wire conductor that are connected to each other are spaced apart by 10 stator slots. To be specific, two stator slots, in which a fourth-layer flat-wire conductor and a fifth-layer flat-wire conductor that are connected to each other are located, are spaced apart by 10 stator slots. Sixth-layer flat-wire conductors are respectively connected to seventh-layer flat-wire conductors, and a sixth-layer flat-wire conductor and a seventh-layer flat-wire conductor that are connected to each other are spaced apart by 10 stator slots. To be specific, two stator slots, in which a sixth-layer flat-wire conductor and a seventh-layer flat-wire conductor that are connected to each other are located, are spaced apart by 10 stator slots. Every two eighth-layer flat-wire conductors are connected to each other, and two eighth-layer flat-wire conductors connected to each other are spaced apart by 11 stator slots. To be specific, two stator slots, in which two eighth-layer flat-wire conductors connected to each other are respectively located, are spaced apart by 11 stator slots.

Similarly, the stator winding in this embodiment of this application may include a plurality of phases of windings. Along a circumferential direction of the stator iron core, flat-wire conductors for forming each phase of winding may be divided into a plurality of phase units that are evenly disposed at spacings. From the first-layer flat-wire conductor to the sixth-layer flat-wire conductor, every two layers of flat-wire conductors in each phase unit constitute a phase spread. To be specific, the first-layer flat-wire conductor and the second-layer flat-wire conductor may constitute a phase spread, the third-layer flat-wire conductor and the fourth-layer flat-wire conductor may constitute a phase spread, the fifth-layer flat-wire conductor and the sixth-layer flat-wire conductor may constitute a phase spread, and the seventh-layer flat-wire conductor and the eighth-layer flat-wire conductor constitute a phase spread. In each phase unit, two adjacent phase spreads are sequentially staggered by one stator slot. For example, in one phase unit, the phase spread formed by the first-layer flat-wire conductor and the second-layer flat-wire conductor and the phase spread formed by the third-layer flat-wire conductor and the fourth-layer flat-wire conductor are staggered by one stator slot, and the phase spread formed by the fifth-layer flat-wire conductor and the sixth-layer flat-wire conductor and the phase spread formed by the seventh-layer flat-wire conductor and the eighth-layer flat-wire conductor are staggered by one stator slot.

Each phase of winding of the stator winding includes four parallel branches. One of a wire incoming end and a wire outgoing end of each parallel branch of each phase of winding is led out from the first-layer flat-wire conductor, and the other of the wire incoming end and the wire outgoing end of each parallel branch of each phase of winding is led out from the second-layer flat-wire conductor. Wire incoming ends of parallel branches of each phase of winding are located in adjacent stator slots, and wire outgoing ends of parallel branches of each phase of winding are located in adjacent stator slots.

Based on a same technical concept, an embodiment of this application provides a specific motor. The motor includes a stator and a rotor. The stator includes a stator iron core and a stator winding. In this embodiment of this application, 48 stator slots are evenly provided along a circumferential direction of an inner wall of the stator iron core. Four layers of flat-wire conductors are inserted into the stator slot along a radial direction of the stator iron core. In a direction from an outer wall of the stator iron core to an inner wall of the stator iron core, four layers of flat-wire conductors in each stator slot are denoted as a first-layer flat-wire conductor, a second-layer flat-wire conductor, a third-layer flat-wire conductor, and a fourth-layer flat-wire conductor. The first-layer flat-wire conductor is disposed close to the outer wall of the stator iron core, and the fourth-layer flat-wire conductor is disposed close to the inner wall of the stator iron core.

At a plug-in end of the stator iron core, every two first-layer flat-wire conductors are connected to each other, and two first-layer flat-wire conductors connected to each other are spaced apart by six stator slots or four stator slots. To be specific, two stator slots, in which two first-layer flat-wire conductors connected to each other are respectively located, are spaced apart by six stator slots or four stator slots. Second-layer flat-wire conductors are respectively connected to third-layer flat-wire conductors, and a second-layer flat-wire conductor and a third-layer flat-wire conductor that are connected to each other are spaced apart by four stator slots. To be specific, two stator slots, in which a second-layer flat-wire conductor and a third-layer flat-wire conductor that are connected to each other are located, are spaced apart by four stator slots. Every two fourth-layer flat-wire conductors are connected to each other, and two fourth-layer flat-wire conductors connected to each other are spaced apart by eight stator slots. To be specific, two stator slots, in which two fourth-layer flat-wire conductors connected to each other are respectively located, are spaced apart by eight stator slots.

Similarly, the stator winding in this embodiment of this application may include a plurality of phases of windings. Along a circumferential direction of the stator iron core, flat-wire conductors for forming each phase of winding may be divided into a plurality of phase units that are evenly disposed at spacings. From the first-layer flat-wire conductor to the sixth-layer flat-wire conductor, every two layers of flat-wire conductors in each phase unit constitute a phase spread. To be specific, the first-layer flat-wire conductor and the second-layer flat-wire conductor may constitute a phase spread, and the third-layer flat-wire conductor and the fourth-layer flat-wire conductor may constitute a phase spread. In each phase unit, two adjacent phase spreads are sequentially staggered by one stator slot. For example, in one phase unit, the phase spread formed by the first-layer flat-wire conductor and the second-layer flat-wire conductor and the phase spread formed by the third-layer flat-wire conductor and the fourth-layer flat-wire conductor are staggered by one stator slot.

Each phase of winding of the stator winding includes two parallel branches. One of a wire incoming end and a wire outgoing end of each parallel branch of each phase of winding is led out from the first-layer flat-wire conductor, and the other of the wire incoming end and the wire outgoing end of each parallel branch of each phase of winding is led out from the second-layer flat-wire conductor. Wire incoming ends of parallel branches of each phase of winding are located in adjacent stator slots, and wire outgoing ends of parallel branches of each phase of winding are located in adjacent stator slots.

Based on a same technical concept, an embodiment of this application further provides a powertrain. The powertrain includes a gearbox and the foregoing motor. The motor is connected to the gearbox in a transmission manner. Specifically, a drive shaft of the motor may be connected to an input shaft of the gearbox in a transmission manner through a transmission component such as a coupling, to output a driving force from the motor to the gearbox.

Based on a same technical concept, a vehicle provided in an embodiment of this application may include the foregoing powertrain. The powertrain is disposed in the vehicle, and provides power for operation of the vehicle. Specifically, the vehicle may be specifically a new energy vehicle driven by electric energy. The new energy vehicle may be specifically a hybrid electric vehicle, a pure electric vehicle, a fuel cell electric vehicle, or the like, or may be a vehicle using a highly efficient energy storage device, such as a supercapacitor, a flywheel battery, or a flywheel energy storage device, as a source of electric energy.

The following describes in detail a specific connection mode for parallel branches in embodiments of this application with reference to specific embodiments.

### Embodiment 1

This embodiment provides a stator of a flat-wire motor. In the stator, as shown in FIG. 1 and FIG. 5, a stator iron core 10 includes 54 stator slots 11. A quantity of conductor layers in the stator slot 11 is 6. A quantity of poles of the stator is 6. A stator winding 20 is divided into a U phase, a V phase, and a W phase. A quantity of slots per phase per pole is 3. A quantity of parallel branches disposed in each phase of winding is 3. Hairpin coils of the stator winding 20 are divided into four coil groups in total. Hairpin coils forming a first layer through plug-in constitute a first coil group. Hairpin coils forming a second layer and a third layer through plug-in constitute a second coil group. Hairpin coils forming a fourth layer and a fifth layer through plug-in constitute a third coil group. Hairpin coils forming a sixth layer through plug-in constitute a fourth coil group.

A U-phase winding is used as an example. For a diagram of phase spread distribution of three parallel branches of the U-phase winding in this embodiment, refer to FIG. 5. As shown in FIG. 5, each stator slot 11 includes six layers of flat-wire conductors 21, a first layer is denoted as L1, a second layer is denoted as L2, a third layer is denoted as L3, a fourth layer is denoted as L4, a fifth layer is denoted as L5, and a sixth layer is denoted as L6. The first layer is a bottom layer of the stator slot 11, and the sixth layer is an opening layer.

The phase spread distribution shown in FIG. 5 is used as an example. A phase spread constituted by L1 and L2 flat-wire conductors in a slot 1, a slot 2, and a slot 3 is denoted as a phase spread A1. A phase spread constituted by L3 and L4 flat-wire conductors in a slot 54, the slot 1, and the slot 2 is denoted as a phase spread A2. A phase spread constituted by L5 and L6 flat-wire conductors in a slot 53, the slot 54, and the slot 1 is denoted as a phase spread A3. The phase spread A1, the phase spread A2, and the phase spread A3 constitute a phase unit A. A phase spread constituted by L1 and L2 flat-wire conductors in a slot 10, a slot 11, and a slot 12 is denoted as a phase spread B1. A phase spread constituted by L3 and L4 flat-wire conductors in a slot 9, the slot 10, and the slot 11 is denoted as a phase spread B2. A phase spread constituted by L5 and L6 flat-wire conductors in a slot 8, the slot 9, and the slot 10 is denoted as a phase spread B3. The phase spread B1, the phase spread B2, and the phase spread B3 constitute a phase unit B. By analogy, a phase spread constituted by L1 and L2 flat-wire conductors in a slot 46, a slot 47, and a slot 48 is denoted as a phase spread F1. A phase spread constituted by L3 and L4 flat-wire conductors in a slot 45, the slot 46, and the slot 47 is denoted as a phase spread F2. A phase spread constituted by L5 and L6 flat-wire conductors in a slot 44, the slot 45, and the slot 46 is denoted as a phase spread F3. The phase spread F1, the phase spread F2, and the phase spread F3 constitute a phase unit F.

As shown in FIG. 1 and FIG. 5, a solid connection line represents a connection mode for the stator winding 20 at a crown end 20a, and a dashed connection line represents a connection mode for the stator winding 20 at a welding end 20b.

As shown in FIG. 5, wire incoming ends of three parallel branches U1, U2, and U3 of the U phase are L2-layer flat-wire conductors in the slot 1, the slot 2, and the slot 3 (the phase spread A1) respectively. The three parallel branches are respectively connected to different layers of flat-wire conductors in adjacent phase units in a same connection mode. Finally, wire outgoing ends of the three parallel branches are led out from L1-layer flat-wire conductors in the slot 46, the slot 47, and the slot 48 respectively. At a plug-in end of the stator winding, a span of an L1-layer flat-wire conductor in each parallel branch is 10 or a combination of 10 and 7. At the plug-in end of the stator winding, a span of an L6-layer flat-wire conductor in each parallel branch is 9. In addition, at the plug-in end and the welding end, a span of an L2-layer flat-wire conductor to an L5-layer flat-wire conductor during connection is 8, and at the welding end, the connection for the L2-layer flat-wire conductor to the L5-layer flat-wire conductor is also a connection between adjacent layers of flat-wire conductors.

The following describes in detail a wiring mode for a U-phase parallel branch in this embodiment with reference to FIG. 5.

In an example for description, a parallel branch (denoted as a first parallel branch U1) whose wire incoming end is an L2-layer flat-wire conductor in the slot 1 is used as an example. By using the L2-layer flat-wire conductor in the slot 1 as the wire incoming end, an L3 layer in the slot 9, an L4 layer in a slot 18, an L5 layer in a slot 26, an L6 layer in a slot 35, an L6 layer in the slot 44, an L5 layer in the slot 35, an L4 layer in a slot 27, an L3 layer in the slot 18, an L2 layer in the slot 10, an L1 layer in the slot 1, an L1 layer in the slot 11, an L2 layer in a slot 20, an L3 layer in a slot 28, an L4 layer in a slot 37, an L5 layer in the slot 45, an L6 layer in the slot 54, an L6 layer in a slot 6, an L5 layer in the slot 54, an L4 layer in the slot 46, an L3 layer in the slot 37, an L2 layer in a slot 29, an L1 layer in the slot 20, an L1 layer in a slot 30, an L2 layer in a slot 39, an L3 layer in the slot 47, an L4 layer in the slot 2, an L5 layer in the slot 10, an L6 layer in a slot 19, an L6 layer in the slot 28, an L5 layer in the slot 19, an L4 layer in the slot 11, an L3 layer in the slot 2, an L2 layer in the slot 48, an L1 layer in the slot 39, and an L1 layer in the slot 46 are sequentially connected, and are led out from an L1-layer flat-wire conductor in the slot 46.

As shown in FIG. 5, for connection modes for the other two parallel branches (denoted as a second parallel branch U2 and a third parallel branch U3), refer to the connection mode for the first parallel branch. Details are not described herein again.

The V-phase winding and the W-phase winding each may be connected based on the connection mode for the U-phase winding.

### Embodiment 2

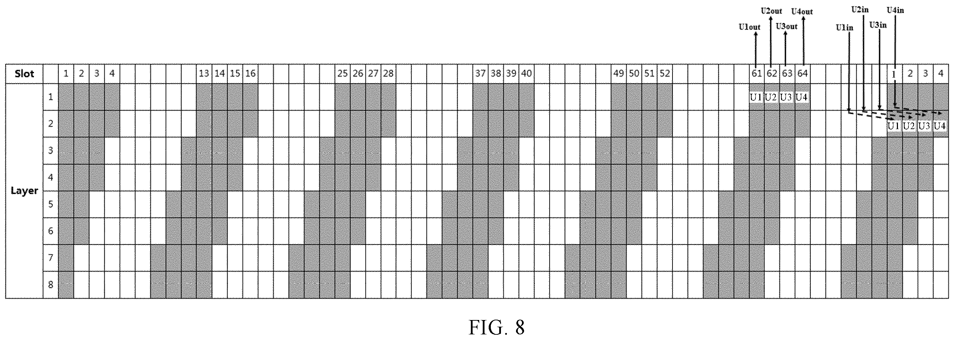

This embodiment provides a stator of a flat-wire motor. FIG. 8 is a schematic diagram of a structure of connections of a U-phase winding according to this embodiment. In the stator, as shown in FIG. 1 and FIG. 8, a stator iron core 10 includes 72 stator slots 11. A quantity of conductor layers in the stator slot 11 is 8. A quantity of poles of the stator is 6. A stator winding 20 is divided into a U phase, a V phase, and a W phase. A quantity of slots per phase per pole is 4. A quantity of parallel branches disposed in each phase of winding is 4. Hairpin coils of the stator winding 20 are divided into five coil groups in total. Hairpin coils forming a first layer through plug-in constitute a first coil group. Hairpin coils forming a second layer and a third layer through plug-in constitute a second coil group. Hairpin coils forming a fourth layer and a fifth layer through plug-in constitute a third coil group. Hairpin coils forming a sixth layer and a seventh layer through plug-in constitute a fifth coil group. Hairpin coils forming an eighth layer through plug-in constitute a fifth coil group.

As shown in FIG. 8, wire incoming ends of four parallel branches U1, U2, U3, and U4 of the U phase are L2-layer flat-wire conductors in a slot 1, a slot 2, a slot 3, and a slot 4 (a phase spread A1) respectively. The four parallel branches are respectively connected to different layers of flat-wire conductors in adjacent phase units in a same connection mode. Finally, wire outgoing ends of the four parallel branches are led out from L1-layer flat-wire conductors in a slot 61, a slot 62, a slot 63, and a slot 64 respectively.

At a plug-in end of the stator winding, a span of an L1-layer flat-wire conductor in each parallel branch is 13 or a combination of 13 and 9, a span of two adjacent layers of flat-wire conductors of an L2-layer flat-wire conductor to an L7-layer flat-wire conductor is 11, and a span of an L1-layer flat-wire conductor is 12. At a welding end of the stator winding, a span of two adjacent flat-wire conductors of the L1-layer flat-wire conductor to the L8-layer flat-wire conductor in each parallel branch is 12.

### Embodiment 3

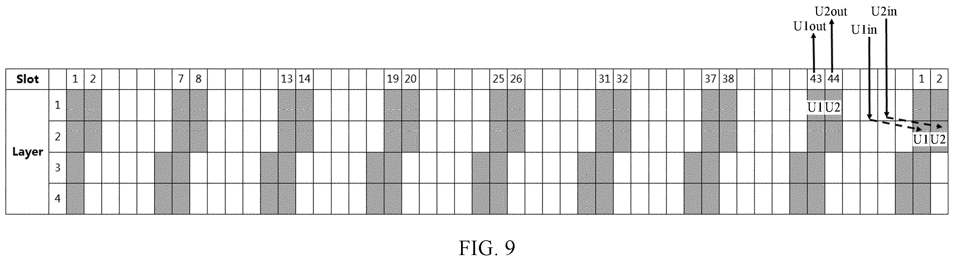

This embodiment provides a stator of a flat-wire motor. FIG. 9 is a schematic diagram of a simplified structure of a U-phase winding according to this embodiment. As shown in FIG. 1 and FIG. 9, a stator iron core 10 includes 48 stator slots 11. A quantity of conductor layers in the stator slot 11 is 4. A quantity of magnetic poles of the stator is 8. A stator winding 20 is divided into a U phase, a V phase, and a W phase. A quantity of slots per phase per pole is 2. A quantity of parallel branches disposed in each phase of winding is 2. The two parallel branches may be denoted as U1 and U2. Each phase unit of the U-phase winding includes two phase spreads. The two phase spreads are staggered by one stator slot along a clockwise or counterclockwise direction.

Hairpin coils of the stator winding are divided into three coil groups in total. Hairpin coils forming a first layer through plug-in constitute a first coil group. Hairpin coils forming a second layer and a third layer through plug-in constitute a second coil group. Hairpin coils forming a fourth layer through plug-in constitute a third coil group. For a plug-in mode for hairpin coils at each layer at a plug-in end, refer to Embodiment 1. For example, a span of hairpin coils in the first coil group at the plug-in end may be a combination of 7 and 5. For a plug-in mode for hairpin coils in the second coil group to the fourth coil group at the plug-in end, refer to Embodiment 1.

At the plug-in end of the stator winding, a span of an L1-layer flat-wire conductor in each parallel branch is a combination of 7 and 5, a span of an L2-layer flat-wire conductor and an L3-layer flat-wire conductor is 5, and a span of an L4-layer flat-wire conductor is 6. At a welding end of the stator winding, a span of two adjacent flat-wire conductors of the L1-layer flat-wire conductor to the L4-layer flat-wire conductor in each parallel branch is 6.

### Comparative Example 1

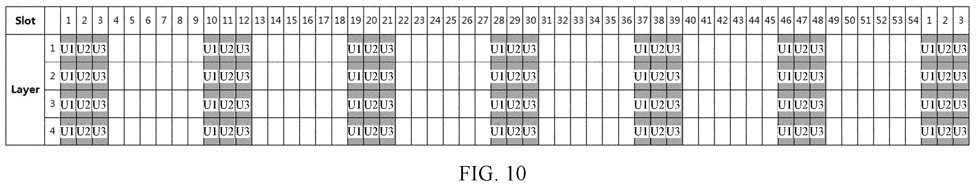

FIG. 10 is a schematic diagram of a structure of connections for a stator winding of a stator in this comparative example. An equivalent pitch of the stator winding is a full pitch, and the equivalent pitch is 9.

### Comparative Example 2

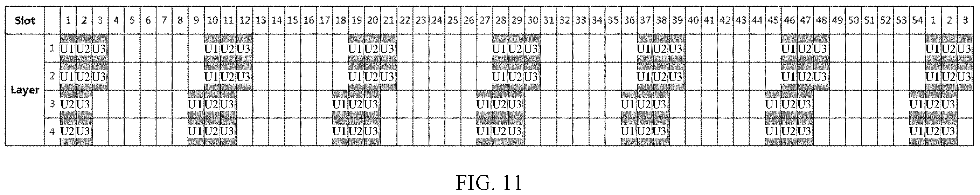

FIG. 11 is a schematic diagram of a structure of connections for a stator winding of a stator in this comparative example. An equivalent pitch of the stator winding is 8.

### Comparative Example 3

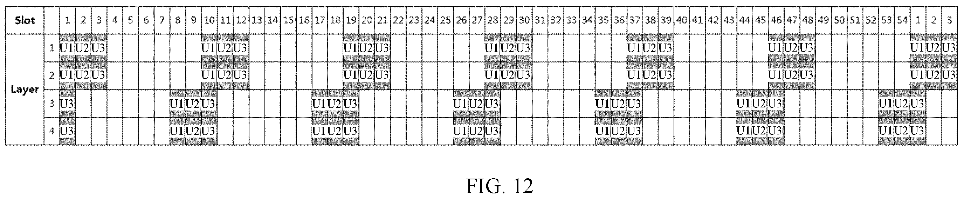

FIG. 12 is a schematic diagram of a structure of connections for a stator winding of a stator in this comparative example. An equivalent pitch of the stator winding is 7.

Simulation calculation is performed on torque fluctuation of a motor and winding coefficients of the stator winding in Embodiment 1 of this application, the full-pitch winding (as shown in FIG. 10) in Comparative Example 1, the short-pitch winding (as shown in FIG. 11) whose equivalent pitch is 8 in Comparative Example 2, and the short-pitch winding (as shown in FIG. 12) whose equivalent pitch is 7 in Comparative Example 3. A calculation result is shown in Table 1.

**Table 1**

| Harmonic order | Comparative example 1 | Comparative example 2 | Comparative example 3 | Embodiment 1 |
|---|---|---|---|---|
| 1 | 0.9598 | 0.9452 | 0.9019 | 0.9212 |
| 5 | 0.2176 | 0.1399 | 0.0378 | 0.0473 |
| 7 | 0.1774 | 0.0607 | 0.1359 | 0.0314 |
| 11 | 0.1774 | 0.0607 | 0.1359 | 0.0314 |
| 13 | 0.2176 | 0.1399 | 0.0378 | 0.0473 |

A winding system of a short-pitch winding in this application is compared with winding systems of a conventional full-pitch winding and a conventional short-pitch winding. It can be learned from related data in Table 1 that, compared with Comparative Example 1 to Comparative Example 3, in a continuous short-pitch winding in embodiments of this application, 5th-order/7th-order harmonics and 11th-order/13th-order harmonics are reduced by more than 80%. (6p)th-order torque ripple and (12p)th-order radial electromagnetic forces of the motor are mainly caused by 5th-order/7th-order harmonics and 11th-order/13th-order harmonics of the stator winding. Therefore, in the stator winding structure in embodiments of this application, (6p)th-order torque ripple and (12p)th-order electromagnetic forces of the motor can be effectively reduced. In addition, for an 18th-order and 36th-order NVH problem in Comparative Example 2 and Comparative Example 3, in the flat-wire motor with the continuous short-pitch winding in embodiments of this application, both 18th-order noise and 36th-order noise are weakened in a winding arrangement design, so that NVH performance is improved.

To sum up, the stator in embodiments of this application has the following advantages:
(1) The connection mode for the stator winding is applicable to flat-wire conductors for which N is an even number and N/2 is an even number. This improves design flexibility of the winding.
(2) The plurality of coil groups are staggered by one stator slot. This is equivalent to a continuous short pitch. This can weaken (6k±1)th-order harmonics of the stator winding while improving NVH performance of the motor.
(3) Flat-wire conductors in parallel branches of each phase of winding are evenly distributed at locations at different layers in stator slots. Back electromotive forces and currents of the parallel branches are exactly the same. This eliminates additional copper loss of circulating currents between the parallel branches, ensures temperature uniformity of the stator winding, and further extends service life of the motor.
(4) Pigtails (including a wire incoming end and a wire outgoing end) of each phase of winding are located at same layers at the bottom of slots, and pigtails of parallel branches are located in adjacent stator slots. This can fully utilize radial space, simplify a structure of a busbar, reduce a height of the busbar at an end in an axial direction of the stator iron core, and help reduce a size of the stator.
(5) U-shaped hairpin coils at different layers are independent of each other, without additional cross-layer hairpin coils. Automatic plug-in can be implemented by using independent winding cages. This simplifies a manufacturing process and facilitates mass production.

The present invention is not limited to the described embodiments. Alterations and/or modifications of the described embodiments are contemplated as being alternative forms of the invention as far as they do not depart from the scope of the invention, which is defined by the appended claims.

## Claims

1. A motor, wherein the motor comprises a stator and a rotor, the stator comprises a stator iron core(10) and a stator winding(20), Z stator slots(11) are evenly provided along a circumferential direction of an inner wall of the stator iron core(10), each stator slot(11) comprises N layers of flat-wire conductors(21), a first-layer flat-wire conductor(21) to an Nth-layer flat-wire conductor(21) are sequentially arranged in the stator slot(11) along a radial direction of the stator iron core(10), and the first-layer flat-wire conductor(21) is close to the bottom of the stator slot(11) along the radial direction of the stator iron core(10);
**characterized in that**, the first-layer flat-wire conductor (21)comprises a plurality of hairpin coils(22) with spans of Z/2p+1 and Z/2p-q+1, and any one of the hairpin coils(22) is located at a same layer; the Nth-layer flat-wire conductor(21) comprises a plurality of hairpin coils(22) with a span of Z/2p, and any one of the hairpin coils(22) is located at a same layer; from a second-layer flat-wire conductor(21) to an (N-1)th-layer flat-wire conductor(21), every two adjacent layers of flat-wire conductors(21) comprise a plurality of hairpin coils(22) with a span of Z/2p - 1, and any one of the hairpin coils(22) is located at two adjacent layers; and a value of a quantity N of layers of flat-wire conductors(21) ranges from 2 to 2q, q is a quantity of slots per phase per pole of the stator winding(20), q≤4, 2p is a quantity of magnetic poles of the stator winding(20), and p is a positive integer.

2. The motor according to claim 1, wherein each phase of winding of the stator winding(20) comprises a plurality of phase units that are evenly disposed along a circumferential direction of the stator iron core(10) at spacings, from the first-layer flat-wire conductor(21) to the Nth-layer flat-wire conductor(21), every two layers of flat-wire conductors(21) in each phase unit constitute a phase spread, and adjacent phase spreads of any phase unit are sequentially staggered by one stator slot(11).

3. The motor according to claim 1, wherein each phase of winding of the stator winding(20) comprises a plurality of parallel branches, one of a wire incoming end and a wire outgoing end of each parallel branch of each phase of winding is led out from the first-layer flat-wire conductor(21), and the other of the wire incoming end and the wire outgoing end of each parallel branch of each phase of winding is led out from the second-layer flat-wire conductor(21).

4. The motor according to claim 1, wherein each phase of winding of the stator winding(20) comprises a plurality of parallel branches, wire incoming ends of parallel branches of each phase of winding are located in adjacent stator slots(11), and wire outgoing ends of parallel branches of each phase of winding are located in adjacent stator slots(11).

5. The motor according to any one of claim 1 to 4, wherein Z is 48, 54, or 72, and N is 4, 6, 8, 10, or 12.

6. The motor according to claim 5, wherein 54 stator slots(11) are evenly provided along a circumferential direction of an inner wall of the stator iron core(10), each stator slot(11) comprises six layers of flat-wire conductors(21), a first-layer flat-wire conductor(21) to a sixth-layer flat-wire conductor(21) are sequentially arranged in the stator slot(11) along a radial direction of the stator iron core(10), and the first-layer flat-wire conductor(21) is close to the bottom of the stator slot along the radial direction of the stator iron core(10);
every two first-layer flat-wire conductors(21) are connected to each other, and two stator slots(11), in which two first-layer flat-wire conductors(21) connected to each other are respectively located, are spaced apart by nine stator slots(11) or six stator slots(11);
second-layer flat-wire conductors(21) are respectively connected to third-layer flat-wire conductors(21), and two stator slots(11), in which a second-layer flat-wire conductor(21) and a third-layer flat-wire conductor(21) that are connected to each other are located, are spaced apart by seven stator slots(11);
fourth-layer flat-wire conductors(21) are respectively connected to fifth-layer flat-wire conductors(21), and two stator slots, in which a fourth-layer flat-wire conductor(21) and a fifth-layer flat-wire conductor(21) that are connected to each other are located, are spaced apart by seven stator slots(11); and
every two sixth-layer flat-wire conductors(21) are connected to each other, and two stator slots(11), in which two sixth-layer flat-wire conductors(21) connected to each other are respectively located, are spaced apart by eight stator slots(11).

7. The motor according to claim 6, wherein each phase of winding of the stator winding(20) comprises a plurality of phase units that are evenly disposed along a circumferential direction of the stator iron core(10) at spacings, from the first-layer flat-wire conductor(21) to the sixth-layer flat-wire conductor(21), every two layers of flat-wire conductors(21) in each phase unit constitute a phase spread, and adjacent phase spreads of any phase unit are sequentially staggered by one stator slot(11).

8. The motor according to claim 6, wherein each phase of winding of the stator winding(20) comprises three parallel branches, one of a wire incoming end and a wire outgoing end of each parallel branch of each phase of winding is led out from the first-layer flat-wire conductor(21), and the other of the wire incoming end and the wire outgoing end of each parallel branch of each phase of winding is led out from the second-layer flat-wire conductor(21).

9. The motor according to claim 6, wherein each phase of winding of the stator winding(20) comprises three parallel branches, wire incoming ends of parallel branches of each phase of winding are located in adjacent stator slots(11), and wire outgoing ends of parallel branches of each phase of winding are located in adjacent stator slots(11).

10. The motor according to claim 5, wherein 72 stator slots(11) are evenly provided along a circumferential direction of an inner wall of the stator iron core(10), each stator slot(11) comprises eight layers of flat-wire conductors(21), a first-layer flat-wire conductor(21) to an eighth-layer flat-wire conductor(21) are sequentially arranged in the stator slot(11) along a radial direction of the stator iron core(10), and the first-layer flat-wire conductor(21) is close to the bottom of the stator slot(11) along the radial direction of the stator iron core(10);
every two first-layer flat-wire conductors(21) are connected to each other, and two stator slots(11), in which two first-layer flat-wire conductors(21) connected to each other are respectively located, are spaced apart by 12 stator slots(11) or eight stator slots(11);
second-layer flat-wire conductors(21) are respectively connected to third-layer flat-wire conductors(21), and two stator slots(11), in which a second-layer flat-wire conductor(21) and a third-layer flat-wire conductor(21) that are connected to each other are located, are spaced apart by 10 stator slots(11);
fourth-layer flat-wire conductors(21) are respectively connected to fifth-layer flat-wire conductors(21), and two stator slots(11), in which a fourth-layer flat-wire conductor(21) and a fifth-layer flat-wire conductor(21) that are connected to each other are located, are spaced apart by 10 stator slots(11);
sixth-layer flat-wire conductors(21) are respectively connected to seventh-layer flat-wire conductors(21), and two stator slots(11), in which a sixth-layer flat-wire conductor(21) and a seventh-layer flat-wire conductor(21) that are connected to each other are located, are spaced apart by 10 stator slots(11); and
every two eighth-layer flat-wire conductors(21) are connected to each other, and two stator slots(11), in which two eighth-layer flat-wire conductors(21) connected to each other are respectively located, are spaced apart by 11 stator slots(11).

11. The motor according to claim 10, wherein each phase of winding of the stator winding(20) comprises a plurality of phase units that are evenly disposed along a circumferential direction of the stator iron core(10) at spacings, from the first-layer flat-wire conductor(21) to the eighth-layer flat-wire conductor(21), every two layers of flat-wire conductors(21) in each phase unit constitute a phase spread, and adjacent phase spreads of any phase unit are sequentially staggered by one stator slot(11).

12. The motor according to claim 5, wherein 48 stator slots(11) are evenly provided along a circumferential direction of an inner wall of the stator iron core(10), each stator slot(11) comprises four layers of flat-wire conductors(21), a first-layer flat-wire conductor(21) to a fourth-layer flat-wire conductor(21) are sequentially arranged in the stator slot(11) along a radial direction of the stator iron core(10), and the first-layer flat-wire conductor(21) is close to the bottom of the stator slot(11) along the radial direction of the stator iron core(10);
every two first-layer flat-wire conductors(21) are connected to each other, and two stator slots(11), in which two first-layer flat-wire conductors(21) connected to each other are respectively located, are spaced apart by six stator slots(11) or four stator slots(11);
second-layer flat-wire conductors(21) are respectively connected to third-layer flat-wire conductors(21), and two stator slots(11), in which a second-layer flat-wire conductor(21) and a third-layer flat-wire conductor(21) that are connected to each other are located, are spaced apart by four stator slots(11); and
every two fourth-layer flat-wire conductors(21) are connected to each other, and two stator slots(11), in which two fourth-layer flat-wire conductors(21) connected to each other are respectively located, are spaced apart by five stator slots(11).

13. The motor according to claim 12, wherein each phase of winding of the stator winding(20) comprises a plurality of phase units that are evenly disposed along a circumferential direction of the stator iron core(10) at spacings, from the first-layer flat-wire conductor(21) to the fourth-layer flat-wire conductor(21), every two layers of flat-wire conductors(21) in each phase unit constitute a phase spread, and adjacent phase spreads of any phase unit are sequentially staggered by one stator slot(11).

14. A powertrain, comprising a gearbox and the motor according to any one of claims 1 to 13, wherein the motor is connected to the gearbox in a transmission manner.

15. A vehicle, comprising the powertrain according to claim 14.

## Patentansprüche

1. Motor, wobei der Motor einen Stator und einen Rotor umfasst, der Stator einen Statoreisenkern (10) und eine Statorwicklung (20) umfasst, Z Statornuten (11) gleichmäßig entlang einer Umfangsrichtung einer Innenwand des Statoreisenkerns (10) vorgesehen sind, jede Statornut (11) N Schichten von Flachdrahtleitern (21) umfasst, die Flachdrahtleiter von einem Flachdrahtleiter (21) einer ersten Schicht bis zu einem Flachdrahtleiter (21) einer N-ten Schicht nacheinander in der Statornut (11) entlang einer radialen Richtung des Statoreisenkerns (10) angeordnet sind und sich der Flachdrahtleiter (21) der ersten Schicht entlang der radialen Richtung des Statoreisenkerns (10) nahe dem Boden der Statornut (11) befindet;
**dadurch gekennzeichnet, dass** der Flachdrahtleiter (21) der ersten Schicht eine Mehrzahl von Haarnadelspulen (22) mit Spannweiten von Z/2p+1 und Z/2p-q+1 umfasst und jede beliebige Haarnadelspule (22) in einer derselben Schicht angeordnet ist; der Flachdrahtleiter (21) der N-ten Schicht eine Mehrzahl von Haarnadelspulen (22) mit einer Spannweite von Z/2p umfasst und jede beliebige Haarnadelspule (22) in einer derselben Schicht angeordnet ist; von einem Flachdrahtleiter (21) der zweiten Schicht bis zu einem Flachdrahtleiter (21) der (N-1)-ten Schicht jeweils zwei benachbarte Schichten von Flachdrahtleitern (21) eine Mehrzahl von Haarnadelspulen (22) mit einer Spannweite von Z/2p-1 umfassen und jede beliebige Haarnadelspule (22) in zwei benachbarten Schichten angeordnet ist; und ein Wert einer Anzahl N von Schichten von Flachdrahtleitern (21) in einem Bereich von 2 bis 2q liegt, q eine Anzahl von Nuten pro Phase und Pol der Statorwicklung (20) ist, q≤4, 2p eine Anzahl von Magnetpolen der Statorwicklung (20) ist und p eine positive ganze Zahl ist.

2. Motor nach Anspruch 1, wobei jede Wicklungsphase der Statorwicklung (20) eine Mehrzahl von Phaseneinheiten umfasst, die entlang einer Umfangsrichtung des Statoreisenkerns (10) gleichmäßig beabstandet angeordnet sind, von dem Flachdrahtleiter (21) der ersten Schicht bis zu dem Flachdrahtleiter (21) der N-ten Schicht jeweils zwei Schichten von Flachdrahtleitern (21) in jeder Phaseneinheit eine Phasenspreizung bilden und benachbarte Phasenspreizungen einer beliebigen Phaseneinheit nacheinander um eine Statornut (11) versetzt sind.

3. Motor nach Anspruch 1, wobei jede Wicklungsphase der Statorwicklung (20) eine Mehrzahl von parallelen Zweigen umfasst, eines von einem Drahteingangsende und einem Drahtausgangsende jedes parallelen Zweigs jeder Wicklungsphase aus dem Flachdrahtleiter (21) der ersten Schicht herausgeführt ist und das andere von dem Drahteingangsende und dem Drahtausgangsende jedes parallelen Zweigs jeder Wicklungsphase aus dem Flachdrahtleiter (21) der zweiten Schicht herausgeführt ist.

4. Motor nach Anspruch 1, wobei jede Wicklungsphase der Statorwicklung (20) eine Mehrzahl von parallelen Zweigen umfasst, Drahteingangsenden von parallelen Zweigen jeder Wicklungsphase in benachbarten Statornuten (11) angeordnet sind und Drahtausgangsenden von parallelen Zweigen jeder Wicklungsphase in benachbarten Statornuten (11) angeordnet sind.

5. Motor nach einem der Ansprüche 1 bis 4, wobei Z 48, 54 oder 72 ist und N 4, 6, 8, 10 oder 12 ist.

6. Motor nach Anspruch 5, wobei 54 Statornuten (11) gleichmäßig entlang einer Umfangsrichtung einer Innenwand des Statoreisenkerns (10) vorgesehen sind, jede Statornut (11) sechs Schichten von Flachdrahtleitern (21) umfasst, die Flachdrahtleiter von einem Flachdrahtleiter (21) einer ersten Schicht bis zu einem Flachdrahtleiter (21) einer sechsten Schicht nacheinander in der Statornut (11) entlang einer radialen Richtung des Statoreisenkerns (10) angeordnet sind und sich der Flachdrahtleiter (21) der ersten Schicht entlang der radialen Richtung des Statoreisenkerns (10) nahe dem Boden der Statornut befindet;
jeweils zwei Flachdrahtleiter (21) der ersten Schicht miteinander verbunden sind und zwei Statornuten (11), in denen zwei miteinander verbundene Flachdrahtleiter (21) der ersten Schicht jeweils angeordnet sind, um neun Statornuten (11) oder sechs Statornuten (11) voneinander beabstandet sind;
Flachdrahtleiter (21) der zweiten Schicht jeweils mit Flachdrahtleitern (21) der dritten Schicht verbunden sind und zwei Statornuten (11), in denen ein Flachdrahtleiter (21) der zweiten Schicht und ein Flachdrahtleiter (21) der dritten Schicht, die miteinander verbunden sind, angeordnet sind, um sieben Statornuten (11) voneinander beabstandet sind;
Flachdrahtleiter (21) der vierten Schicht jeweils mit Flachdrahtleitern (21) der fünften Schicht verbunden sind und zwei Statornuten, in denen ein Flachdrahtleiter (21) der vierten Schicht und ein Flachdrahtleiter (21) der fünften Schicht, die miteinander verbunden sind, angeordnet sind, um sieben Statornuten (11) voneinander beabstandet sind; und
jeweils zwei Flachdrahtleiter (21) der sechsten Schicht miteinander verbunden sind und zwei Statornuten (11), in denen zwei miteinander verbundene Flachdrahtleiter (21) der sechsten Schicht jeweils angeordnet sind, um acht Statornuten (11) voneinander beabstandet sind.

7. Motor nach Anspruch 6, wobei jede Wicklungsphase der Statorwicklung (20) eine Mehrzahl von Phaseneinheiten umfasst, die entlang einer Umfangsrichtung des Statoreisenkerns (10) gleichmäßig beabstandet angeordnet sind, von dem Flachdrahtleiter (21) der ersten Schicht bis zu dem Flachdrahtleiter (21) der sechsten Schicht jeweils zwei Schichten von Flachdrahtleitern (21) in jeder Phaseneinheit eine Phasenspreizung bilden und benachbarte Phasenspreizungen einer beliebigen Phaseneinheit nacheinander um eine Statornut (11) versetzt sind.

8. Motor nach Anspruch 6, wobei jede Wicklungsphase der Statorwicklung (20) drei parallele Zweige umfasst, eines von einem Drahteingangsende und einem Drahtausgangsende jedes parallelen Zweigs jeder Wicklungsphase aus dem Flachdrahtleiter (21) der ersten Schicht herausgeführt ist und das andere von dem Drahteingangsende und dem Drahtausgangsende jedes parallelen Zweigs jeder Wicklungsphase aus dem Flachdrahtleiter (21) der zweiten Schicht herausgeführt ist.

9. Motor nach Anspruch 6, wobei jede Wicklungsphase der Statorwicklung (20) drei parallele Zweige umfasst, Drahteingangsenden von parallelen Zweigen jeder Wicklungsphase in benachbarten Statornuten (11) angeordnet sind und Drahtausgangsenden von parallelen Zweigen jeder Wicklungsphase in benachbarten Statornuten (11) angeordnet sind.

10. Motor nach Anspruch 5, wobei 72 Statornuten (11) gleichmäßig entlang einer Umfangsrichtung einer Innenwand des Statoreisenkerns (10) vorgesehen sind, jede Statornut (11) acht Schichten von Flachdrahtleitern (21) umfasst, die Flachdrahtleiter von einem Flachdrahtleiter (21) einer ersten Schicht bis zu einem Flachdrahtleiter (21) einer achten Schicht nacheinander in der Statornut (11) entlang einer radialen Richtung des Statoreisenkerns (10) angeordnet sind und sich der Flachdrahtleiter (21) der ersten Schicht entlang der radialen Richtung des Statoreisenkerns (10) nahe dem Boden der Statornut (11) befindet;
jeweils zwei Flachdrahtleiter (21) der ersten Schicht miteinander verbunden sind und zwei Statornuten (11), in denen zwei miteinander verbundene Flachdrahtleiter (21) der ersten Schicht jeweils angeordnet sind, um 12 Statornuten (11) oder acht Statornuten (11) voneinander beabstandet sind;
Flachdrahtleiter (21) der zweiten Schicht jeweils mit Flachdrahtleitern (21) der dritten Schicht verbunden sind und zwei Statornuten (11), in denen ein Flachdrahtleiter (21) der zweiten Schicht und ein Flachdrahtleiter (21) der dritten Schicht, die miteinander verbunden sind, angeordnet sind, um 10 Statornuten (11) voneinander beabstandet sind;
Flachdrahtleiter (21) der vierten Schicht jeweils mit Flachdrahtleitern (21) der fünften Schicht verbunden sind und zwei Statornuten (11), in denen ein Flachdrahtleiter (21) der vierten Schicht und ein Flachdrahtleiter (21) der fünften Schicht, die miteinander verbunden sind, angeordnet sind, um 10 Statornuten (11) voneinander beabstandet sind;
Flachdrahtleiter (21) der sechsten Schicht jeweils mit Flachdrahtleitern (21) der siebten Schicht verbunden sind und zwei Statornuten (11), in denen ein Flachdrahtleiter (21) der sechsten Schicht und ein Flachdrahtleiter (21) der siebten Schicht, die miteinander verbunden sind, angeordnet sind, um 10 Statornuten (11) voneinander beabstandet sind; und
jeweils zwei Flachdrahtleiter (21) der achten Schicht miteinander verbunden sind und zwei Statornuten (11), in denen zwei miteinander verbundene Flachdrahtleiter (21) der achten Schicht jeweils angeordnet sind, um 11 Statornuten (11) voneinander beabstandet sind.

11. Motor nach Anspruch 10, wobei jede Wicklungsphase der Statorwicklung (20) eine Mehrzahl von Phaseneinheiten umfasst, die entlang einer Umfangsrichtung des Statoreisenkerns (10) gleichmäßig beabstandet angeordnet sind, von dem Flachdrahtleiter (21) der ersten Schicht bis zu dem Flachdrahtleiter (21) der achten Schicht jeweils zwei Schichten von Flachdrahtleitern (21) in jeder Phaseneinheit eine Phasenspreizung bilden und benachbarte Phasenspreizungen einer beliebigen Phaseneinheit nacheinander um eine Statornut (11) versetzt sind.

12. Motor nach Anspruch 5, wobei 48 Statornuten (11) gleichmäßig entlang einer Umfangsrichtung einer Innenwand des Statoreisenkerns (10) vorgesehen sind, jede Statornut (11) vier Schichten von Flachdrahtleitern (21) umfasst, die Flachdrahtleiter von einem Flachdrahtleiter (21) einer ersten Schicht bis zu einem Flachdrahtleiter (21) einer vierten Schicht nacheinander in der Statornut (11) entlang einer radialen Richtung des Statoreisenkerns (10) angeordnet sind und sich der Flachdrahtleiter (21) der ersten Schicht entlang der radialen Richtung des Statoreisenkerns (10) nahe dem Boden der Statornut (11) befindet;
jeweils zwei Flachdrahtleiter (21) der ersten Schicht miteinander verbunden sind und zwei Statornuten (11), in denen zwei miteinander verbundene Flachdrahtleiter (21) der ersten Schicht jeweils angeordnet sind, um sechs Statornuten (11) oder vier Statornuten (11) voneinander beabstandet sind;
Flachdrahtleiter (21) der zweiten Schicht jeweils mit Flachdrahtleitern (21) der dritten Schicht verbunden sind und zwei Statornuten (11), in denen ein Flachdrahtleiter (21) der zweiten Schicht und ein Flachdrahtleiter (21) der dritten Schicht, die miteinander verbunden sind, angeordnet sind, um vier Statornuten (11) voneinander beabstandet sind; und
jeweils zwei Flachdrahtleiter (21) der vierten Schicht miteinander verbunden sind und zwei Statornuten (11), in denen zwei miteinander verbundene Flachdrahtleiter (21) der vierten Schicht jeweils angeordnet sind, um fünf Statornuten (11) voneinander beabstandet sind.

13. Motor nach Anspruch 12, wobei jede Wicklungsphase der Statorwicklung (20) eine Mehrzahl von Phaseneinheiten umfasst, die entlang einer Umfangsrichtung des Statoreisenkerns (10) gleichmäßig beabstandet angeordnet sind, von dem Flachdrahtleiter (21) der ersten Schicht bis zu dem Flachdrahtleiter (21) der vierten Schicht jeweils zwei Schichten von Flachdrahtleitern (21) in jeder Phaseneinheit eine Phasenspreizung bilden und benachbarte Phasenspreizungen einer beliebigen Phaseneinheit nacheinander um eine Statornut (11) versetzt sind.

14. Antriebsstrang, umfassend ein Getriebe und den Motor nach einem der Ansprüche 1 bis 13, wobei der Motor übertragungstechnisch mit dem Getriebe verbunden ist.

15. Fahrzeug, umfassend den Antriebsstrang nach Anspruch 14.

## Revendications

1. Moteur, le moteur comprenant un stator et un rotor, le stator comprenant un noyau statorique en fer (10) et un enroulement statorique (20), Z encoches statoriques (11) étant uniformément disposées le long d'une direction circonférentielle d'une paroi interne du noyau statorique en fer (10), chaque encoche statorique (11) comprenant N couches de conducteurs à fil plat (21), un conducteur à fil plat de première couche (21) jusqu'à un conducteur à fil plat de Nième couche (21) étant successivement disposés dans l'encoche statorique (11) le long d'une direction radiale du noyau statorique en fer (10), et le conducteur à fil plat de première couche (21) étant proche du fond de l'encoche statorique (11) le long de la direction radiale du noyau statorique en fer (10) ;
**caractérisé en ce que** le conducteur à fil plat de première couche (21) comprend une pluralité de bobines en épingle à cheveux (22) avec des étendues de Z/2p+1 et Z/2p-q+1, et n'importe laquelle des bobines en épingle à cheveux (22) se situe au niveau d'une même couche ; le conducteur à fil plat de Nième couche (21) comprend une pluralité de bobines en épingle à cheveux (22) avec une étendue de Z/2p, et n'importe laquelle des bobines en épingle à cheveux (22) se situe au niveau d'une même couche ; depuis un conducteur à fil plat de deuxième couche (21) jusqu'à un conducteur à fil plat de (N-1)ième couche (21), toutes les paires de couches adjacentes de conducteurs à fil plat (21) comprennent une pluralité de bobines en épingle à cheveux (22) avec une étendue de Z/2p - 1, et n'importe laquelle des bobines en épingle à cheveux (22) se situe au niveau de deux couches adjacentes ; et une valeur d'une quantité N de couches de conducteurs à fil plat (21) est comprise entre 2 et 2q, q est une quantité d'encoches par phase et par pôle de l'enroulement statorique (20), q ≤ 4, 2p est une quantité de pôles magnétiques de l'enroulement statorique (20), et p est un entier positif.

2. Moteur selon la revendication 1, dans lequel chaque phase d'enroulement de l'enroulement statorique (20) comprend une pluralité d'unités de phase qui sont uniformément disposées le long d'une direction circonférentielle du noyau statorique de fer (10) à intervalles ; depuis le conducteur à fil plat de première couche (21) jusqu'au conducteur à fil plat de Nième couche (21), toutes les paires de couches de conducteurs à fil plat (21) dans chaque unité de phase constituent un étalement de phase, et des étalements de phase adjacents de n'importe quelle unité de phase sont successivement décalés d'une encoche statorique (11).

3. Moteur selon la revendication 1, dans lequel chaque phase d'enroulement de l'enroulement statorique (20) comprend une pluralité de branches parallèles, une extrémité parmi une extrémité entrante de fil et une extrémité sortante de fil de chaque branche parallèle de chaque phase d'enroulement est emmenée depuis le conducteur à fil plat de première couche (21), et l'autre extrémité parmi l'extrémité entrante de fil et l'extrémité sortante de fil de chaque branche parallèle de chaque phase d'enroulement est emmenée depuis le conducteur à fil plat de deuxième couche (21).

4. Moteur selon la revendication 1, dans lequel chaque phase d'enroulement de l'enroulement statorique (20) comprend une pluralité de branches parallèles, des extrémités entrantes de fil de branches parallèles de chaque phase d'enroulement se situent dans des encoches statoriques adjacentes (11), et des extrémités sortantes de fil de branches parallèles de chaque phase d'enroulement se situent dans des encoches statoriques adjacentes (11).

5. Moteur selon l'une quelconque des revendications 1 à 4, dans lequel Z vaut 48, 54 ou 72, et N est 4, 6, 8, 10 ou 12.

6. Moteur selon la revendication 5, dans lequel 54 encoches statoriques (11) sont uniformément disposées le long d'une direction circonférentielle d'une paroi interne du noyau statorique en fer (10), chaque encoche statorique (11) comprend six couches de conducteurs à fil plat (21), un conducteur à fil plat de première couche (21) jusqu'à un conducteur à fil plat de sixième couche (21) sont successivement disposés dans l'encoche statorique (11) le long d'une direction radiale du noyau statorique en fer (10), et le conducteur à fil plat de première couche (21) est proche du fond de l'encoche statorique le long de la direction radiale du noyau statorique en fer (10) ;
les conducteurs de toutes les paires de conducteurs à fil plat de première couche (21) sont reliés l'un à l'autre, et deux encoches statoriques (11) dans lesquelles se situent respectivement deux conducteurs à fil plat de première couche (21) reliés l'un à l'autre sont séparées par neuf encoches statoriques (11) ou six encoches statoriques (11) ;
des conducteurs à fil plat de deuxième couche (21) sont respectivement reliés à des conducteurs à fil plat de troisième couche (21), et deux encoches statoriques (11) dans lesquelles se situent un conducteur à fil plat de deuxième couche (21) et un conducteur à fil plat de troisième couche (21) qui sont reliés l'un à l'autre sont séparées par sept encoches statoriques (11) ;
des conducteurs à fil plat de quatrième couche (21) sont respectivement reliés à des conducteurs à fil plat de cinquième couche (21), et deux encoches statoriques dans lesquelles se situent un conducteur à fil plat de quatrième couche (21) et un conducteur à fil plat de cinquième couche (21) qui sont reliés l'un à l'autre sont séparées par sept encoches statoriques (11) ; et
les conducteurs de toutes les paires de conducteurs à fil plat de sixième couche (21) sont reliés l'un à l'autre, et deux encoches statoriques (11) dans lesquelles se situent respectivement deux conducteurs à fil plat de sixième couche (21) reliés l'un à l'autre sont séparées par huit encoches statoriques (11).

7. Moteur selon la revendication 6, dans lequel chaque phase d'enroulement de l'enroulement statorique (20) comprend une pluralité d'unités de phase qui sont uniformément disposées le long d'une direction circonférentielle du noyau statorique de fer (10) à intervalles, depuis le conducteur à fil plat de première couche (21) jusqu'au conducteur à fil plat de sixième couche (21), toutes les paires de couches de conducteurs à fil plat (21) dans chaque unité de phase constituent un étalement de phase, et des étalements de phase adjacents de n'importe quelle unité de phase sont successivement décalés d'une encoche statorique (11).

8. Moteur selon la revendication 6, dans lequel chaque phase d'enroulement de l'enroulement statorique (20) comprend trois branches parallèles, une extrémité parmi une extrémité entrante de fil et une extrémité sortante de fil de chaque branche parallèle de chaque phase d'enroulement est emmenée depuis le conducteur à fil plat de première couche (21), et l'autre extrémité parmi l'extrémité entrante de fil et l'extrémité sortante de fil de chaque branche parallèle de chaque phase d'enroulement est emmenée depuis le conducteur à fil plat de deuxième couche (21).

9. Moteur selon la revendication 6, dans lequel chaque phase d'enroulement de l'enroulement statorique (20) comprend trois branches parallèles, des extrémités entrantes de fil de branches parallèles de chaque phase d'enroulement se situent dans des encoches statoriques adjacentes (11), et des extrémités sortantes de fil de branches parallèles de chaque phase d'enroulement se situent dans des encoches statoriques adjacentes (11).

10. Moteur selon la revendication 5, dans lequel 72 encoches statoriques (11) sont uniformément disposées le long d'une direction circonférentielle d'une paroi interne du noyau statorique en fer (10), chaque encoche statorique (11) comprend huit couches de conducteurs à fil plat (21), un conducteur à fil plat de première couche (21) jusqu'à un conducteur à fil plat de huitième couche (21) sont successivement disposés dans l'encoche statorique (11) le long d'une direction radiale du noyau statorique en fer (10), et le conducteur à fil plat de première couche (21) est proche du fond de l'encoche statorique (11) le long de la direction radiale du noyau statorique en fer (10) ;
les conducteurs de toutes les paires de conducteurs à fil plat de première couche (21) sont reliés l'un à l'autre, et deux encoches statoriques (11) dans lesquelles se situent respectivement deux conducteurs à fil plat de première couche (21) reliés l'un à l'autre sont séparées par 12 encoches statoriques (11) ou huit encoches statoriques (11) ;
des conducteurs à fil plat de deuxième couche (21) sont respectivement reliés à des conducteurs à fil plat de troisième couche (21), et deux encoches statoriques (11) dans lesquelles se situent un conducteur à fil plat de deuxième couche (21) et un conducteur à fil plat de troisième couche (21) qui sont reliés l'un à l'autre sont séparées par 10 encoches statoriques (11) ;
des conducteurs à fil plat de quatrième couche (21) sont respectivement reliés à des conducteurs à fil plat de cinquième couche (21), et deux encoches statoriques (11) dans lesquelles se situent un conducteur à fil plat de quatrième couche (21) et un conducteur à fil plat de cinquième couche (21) qui sont reliés l'un à l'autre sont séparées par 10 encoches statoriques (11) ;
des conducteurs à fil plat de sixième couche (21) sont respectivement reliés à des conducteurs à fil plat de septième couche (21), et deux encoches statoriques (11) dans lesquelles se situent un conducteur à fil plat de sixième couche (21) et un conducteur à fil plat de septième couche (21) qui sont reliés l'un à l'autre sont séparées par 10 encoches statoriques (11) ; et
les conducteurs de toutes les paires de conducteurs à fil plat de huitième couche (21) sont reliés l'un à l'autre, et deux encoches statoriques (11) dans lesquelles se situent respectivement deux conducteurs à fil plat de huitième couche (21) reliés l'un à l'autre sont séparées par 11 encoches statoriques (11).

11. Moteur selon la revendication 10, dans lequel chaque phase d'enroulement de l'enroulement statorique (20) comprend une pluralité d'unités de phase qui sont uniformément disposées le long d'une direction circonférentielle du noyau statorique de fer (10) à intervalles ; depuis le conducteur à fil plat de première couche (21) jusqu'au conducteur à fil plat de huitième couche (21), toutes les paires de couches de conducteurs à fil plat (21) dans chaque unité de phase constituent un étalement de phase, et des étalements de phase adjacents de n'importe quelle unité phase sont successivement décalés d'une encoche statorique (11).

12. Moteur selon la revendication 5, dans lequel 48 encoches statoriques (11) sont uniformément disposées le long d'une direction circonférentielle d'une paroi interne du noyau statorique en fer (10), chaque encoche statorique (11) comprend quatre couches de conducteurs à fil plat (21), un conducteur à fil plat de première couche (21) jusqu'à un conducteur à fil plat de quatrième couche (21) sont successivement disposés dans l'encoche statorique (11) le long d'une direction radiale du noyau statorique en fer (10), et le conducteur à fil plat de première couche (21) est proche du fond de l'encoche statorique (11) le long de la direction radiale du noyau statorique en fer (10) ;
les conducteurs de toutes les paires de conducteurs à fil plat de première couche (21) sont reliés l'un à l'autre, et deux encoches statoriques (11) dans lesquelles se situent respectivement deux conducteurs à fil plat de première couche (21) reliés l'un à l'autre sont séparées par six encoches statoriques (11) ou quatre encoches statoriques (11) ;
des conducteurs à fil plat de deuxième couche (21) sont respectivement reliés à des conducteurs à fil plat de troisième couche (21), et deux encoches statoriques (11) dans lesquelles se situent un conducteur à fil plat de deuxième couche (21) et un conducteur à fil plat de troisième couche (21) qui sont reliés l'un à l'autre sont séparées par quatre encoches statoriques (11) ; et
les conducteurs de toutes les paires de conducteurs à fil plat de quatrième couche (21) sont reliés l'un à l'autre, et deux encoches statoriques (11) dans lesquelles se situent respectivement deux conducteurs à fil plat de quatrième couche (21) reliés l'un à l'autre sont séparées par cinq encoches statoriques (11).

13. Moteur selon la revendication 12, dans lequel chaque phase d'enroulement de l'enroulement statorique (20) comprend une pluralité d'unités de phase qui sont uniformément disposées le long d'une direction circonférentielle du noyau statorique de fer (10) à intervalles ; depuis le conducteur à fil plat de première couche (21) jusqu'au conducteur à fil plat de quatrième couche (21), toutes les paires de couches de conducteurs à fil plat (21) dans chaque unité de phase constituent un étalement de phase, et des étalements de phase adjacents de n'importe quelle unité de phase sont successivement décalés d'une encoche statorique (11).

14. Groupe motopropulseur, comprenant une boîte de vitesses et le moteur selon l'une quelconque des revendications 1 à 13, le moteur étant relié à la boîte de vitesses à la manière d'une transmission.

15. Véhicule, comprenant le groupe motopropulseur selon la revendication 14.
